# EUROPEAN PATENT APPLICATION

(11) **EP 4 738 874 A1**
(43) Date of publication of application: **06.05.2026**
(21) Application number: 25209189.7
(22) Date of filing: 16.10.2025
(51) Int. Cl.: H04N 25/773, H04N 25/42, H04N 25/47

(54) **RECONFIGURABLE HYBRID EVENT-BASED VISION SENSOR AND CMOS IMAGE SENSOR**

(30) Priority: 31.10.2024 US 202463714458 P; 08.10.2025 US 202519352777
(71) Applicant: OmniVision Technologies, Inc., Santa Clara California 95054 (US)
(72) Inventor: Suess, Andreas, Santa Clara, 95054 (US); Tsau, Guannho, Santa Clara, 95054 (US)
(74) Representative: Mewburn Ellis LLP

(57) **Abstract**

Reconfigurable hybrid event-based vision sensor and CMOS image sensor systems (an associated systems, devices, and methods) are disclosed. In one embodiment, a hybrid image sensor includes a pixel circuit array with pixel circuits reconfigurable between (i) a CMOS image sensor (CIS) configuration for obtaining intensity information and (ii) an event vision sensor (EVS) configuration for obtaining contrast information. Control circuitry can reconfigure a first subset of pixel circuits into the EVS configuration based on detected motion in an external scene, switching the hybrid image sensor between (a) a CIS-only mode in which all pixel circuits operate in the CIS configuration and (b) a hybrid mode in which the first subset operates in the EVS configuration and a second subset operates in the CIS configuration. The control circuitry can control the number of pixel circuits included in the first subset based on luminance conditions in the external scene.

## Description

### CROSS-REFERENCE TO RELATED APPLICATION(S)

This application claims priority to U.S. Provisional Application No. 63/714,458, titled RECONFIGURABLE HYBRID EVENT-BASED VISION SENSOR AND CMOS IMAGE SENSOR, filed October 31, 2024, which is hereby incorporated by reference in its entirety.

### TECHNICAL FIELD

The present disclosure relates to image sensors, and more particularly to a reconfigurable hybrid event-based vision sensor (EVS) and CMOS image sensor (CIS) that can dynamically switch between operating modes based at least in part on motion detection and luminance conditions. For example, several embodiments of the present technology relate to hybrid image sensor systems that can reconfigure pixel functionality between CMOS image sensor operation and event-based vision sensor operation based at least in part on detected motion and ambient lighting conditions.

### BACKGROUND

CMOS image sensors (CIS) operate in response to image light from an external scene being incident upon the image sensor. The image sensor includes an array of pixel circuits having photosensitive elements (e.g., photodiodes) that absorb a portion of the incident image light and generate image charge upon absorption of the image light. The image charge photogenerated by the pixel circuits may be measured as analog output image signals on column bitlines that vary as a function of the incident image light. In other words, the amount of image charge generated is proportional to the intensity of the image light, which is read out as analog image signals from the column bitlines and converted to digital values to provide information that is representative of the external scene. CMOS image sensors (CIS) typically capture complete image frames through synchronized pixel circuit readout operations.

By contrast, event-based vision sensors (EVS) represent a specialized class of image sensors that detect and output luminance changes from individual pixel circuits, combined with coordinate and temporal information. These sensors operate asynchronously, with each pixel circuit independently monitoring for luminance changes that exceed preset threshold values. When such changes are detected, the sensor generates event data that can include pixel circuit coordinates, timing information, and/or polarity data. This approach enables high-speed data output with low latency while maintaining reduced power consumption. The asynchronous operation allows multiple pixel circuits to generate events simultaneously, with arbitration circuits managing output order based on earliest-received events.

Hybrid sensor architectures combine EVS and CIS capabilities within a single device. Such hybrid image sensors offer the potential to leverage the advantages of both EVS and CIS sensing modalities. For example, hybrid image systems can utilize a first subset of pixel circuits to provide conventional image data and a second subset of pixel circuits to provide event-based information.

### BRIEF DESCRIPTION OF THE DRAWINGS

Non-limiting and non-exhaustive embodiments of the present technology are described below with reference to the following figures, in which like or similar reference characters are used to refer to like or similar components throughout unless otherwise specified.
**FIG. 1A** illustrates a block diagram of a stacked hybrid sensor system configured in accordance with various embodiments of the present technology.
**FIG. 1B** illustrates a block diagram of the stacked hybrid sensor system of **FIG. 1A** configured in accordance with various embodiments of the present technology.
**FIG. 2** illustrates a circuit diagram of a pixel circuit with mode switching capability configured in accordance with various embodiments of the present technology.
**FIGS. 3A-3E** illustrate pixel arrangements showing different ratios of CIS and EVS pixels configured in accordance with various embodiments of the present technology.
**FIG. 4** illustrates a circuit diagram of a multi-subpixel pixel circuit configured in accordance with various embodiments of the present technology.
**FIG. 5** is a flow diagram illustrating a method of operating an image sensor in accordance with various embodiments of the present technology.
**FIGS. 6 and 7** illustrate example methods of operating pixel arrangements for a 50% EVS/50% CIS pixel allocation in accordance with various embodiments of the present technology.
**FIGS. 8-10** illustrate example methods of operating pixel arrangements for a 25% EVS/75% CIS pixel allocation in accordance with various embodiments of the present technology.
**FIGS. 11** and **12** illustrate example methods of operating pixel arrangements for a 12.5% EVS/87.5% CIS pixel allocation in accordance with various embodiments of the present technology.
**FIG. 13** illustrates an example method of operating a pixel arrangement for a 6.25% EVS/93.75% CIS pixel allocation in accordance with various embodiments of the present technology.
**FIGS. 14A-14B** illustrate an example method of operating a pixel arrangement for a 3.125% EVS/96.875% CIS pixel allocation in accordance with various embodiments of the present technology.

Skilled artisans will appreciate that elements in the figures are illustrated for simplicity and clarity and are not necessarily drawn to scale. For example, the dimensions of some of the elements in the figures may be exaggerated relative to other elements to aid in understanding of various aspects of the present technology. In addition, common but well-understood elements or methods that are useful or necessary in a commercially feasible embodiment are often not depicted in the figures or described in detail below to avoid unnecessarily obscuring the description of various aspects of the present technology.

### DETAILED DESCRIPTION

The present technology is generally directed to reconfigurable hybrid image sensor systems that combine event-based vision sensor (EVS) and CMOS image sensor (CIS) capabilities within a single device. The systems include pixel circuits that can be dynamically switched between operating as CIS pixel circuits or EVS pixel circuits (e.g., through mode switch circuits) based on detected scene characteristics such as motion detection and luminance conditions. When motion is detected in a scene, the system can automatically transition from a CIS-only mode to a hybrid mode where a subset of pixel circuits provide EVS functionality while the remaining pixel circuits continue to provide CIS functionality. The allocation ratio between EVS and CIS pixel circuits in the hybrid mode can be automatically adjusted based on ambient luminance levels, with higher luminance conditions requiring fewer EVS pixel circuits due to improved EVS latency performance under bright lighting conditions. This dynamic reconfiguration capability enables the hybrid image sensor systems to optimize performance across varying scene conditions while balancing tradeoffs between signal-to-noise ratio, latency performance, and photoactive area utilization.

In the following description, specific details are set forth to provide a thorough understanding of aspects of the present technology. One skilled in the relevant art will recognize, however, that the systems, devices, and techniques described herein can be practiced without one or more of the specific details set forth herein, or with other methods, components, materials, etc.

Reference throughout this specification to an "example" or an "embodiment" means that a particular feature, structure, or characteristic described in connection with the example or embodiment is included in at least one example or embodiment of the present technology. Thus, use of the phrases "for example," "as an example," or "an embodiment" herein are not necessarily all referring to the same example or embodiment and are not necessarily limited to the specific example or embodiment discussed. Furthermore, features, structures, or characteristics of the present technology described herein may be combined in any suitable manner to provide further examples or embodiments of the present technology.

Spatially relative terms (e.g., "beneath," "below," "over," "under," "above," "upper," "top," "bottom," "left," "right," "center," "middle," and the like) may be used herein for ease of description to describe one element's or feature's relationship relative to one or more other elements or features as illustrated in the figures. It will be understood that the spatially relative terms are intended to encompass different orientations of a device or system in use or operation, in addition to the orientation depicted in the figures. For example, if a device or system illustrated in the figures is rotated, turned, or flipped about a horizontal axis, elements or features described as "below" or "beneath" or "under" one or more other elements or features may then be oriented "above" the one or more other elements or features. Thus, the exemplary terms "below" and "under" are non-limiting and can encompass both an orientation of above and below. The device or system may additionally, or alternatively, be otherwise oriented (e.g., rotated ninety degrees about a vertical axis, or at other orientations) than illustrated in the figures, and the spatially relative descriptors used herein are interpreted accordingly. In addition, it will also be understood that when an element is referred to as being "between" two other elements, it can be the only element between the two other elements, or one or more intervening elements may also be present.

### A. Overview

Hybrid image sensor systems combine event-based vision sensor (EVS) and CMOS image sensor (CIS) capabilities within a single device to leverage the advantages of both sensing modalities. In some hybrid image sensors, a first subset of pixel circuits are permanently utilized to provide conventional image data and a second subset of pixel circuits are permanently utilized to provide event-based information. In other hybrid image sensors, individual pixel circuits can be reconfigured between being utilized as CIS pixel circuits or being utilized as EVS pixel circuits, such as depending on an operating mode of the hybrid image sensors. For example, when a hybrid image sensor is operated in a CIS-only mode, the hybrid image sensor can utilize all of the pixel circuits as CIS pixel circuits to provide conventional image data; when operated in an EVS-only mode, the hybrid image sensor can utilize all of the pixel circuits as EVS pixel circuits to provide event-based information; and when operated in a hybrid mode, the hybrid image sensor can utilize (i) a first subset of pixel circuits as CIS pixel circuits to provide conventional image data and (ii) a second subset of pixel circuits as EVS pixel circuits to provide event-based information. Regardless of the implementation, hybrid image sensors sacrifice at least a portion of the photoactive area (and therefore a portion of CIS sensitivity) whenever pixel circuits are utilized to provide EVS functionality.

The relative allocation of pixel circuits used to provide EVS functionality to the overall pixel array can affect overall system performance. More specifically, the balance between EVS and CIS functionality in hybrid sensors involves tradeoffs between factors such as signal-to-noise ratio, latency performance, and photoactive area utilization. For example, while an increase in sacrificed photoactive area for EVS functionality improves EVS latency, this approach also degrades the signal-to-noise ratio (SNR) of the CIS data stream.

As discussed above, many hybrid image sensors operate with fixed allocations of pixel circuits between EVS and CIS functionality. Such implementations, however, can result in suboptimal performance across varying scene conditions. Dynamic reconfiguration of pixel functionality between EVS and CIS modes in other hybrid image sensors presents opportunities to optimize sensor performance across varying scene conditions and/or based on scene characteristics and application requirements. For example, for static scenes, it may be preferable to operate all or a substantial majority (e.g., 95% or more) of the pixel circuits in an array as CIS pixel circuits as (a) the goal of EVS pixel circuits is to detect changes in signal intensity that are often not present in static scenes and (b) the benefit of EVS pixel circuits lies primarily in fast moving scenes. By contrast, for dynamic scenes, it may be preferable to operate a greater number of the pixel circuits as EVS pixel circuits. The challenge then arises in (1) controlling when the sensor is operated in a CIS-only mode (e.g., in the event a static scene is present/observed) versus when the sensor is operated in a hybrid mode (e.g., in the event a dynamic scene is present/observed), and (2) when the image sensor is operated in hybrid mode, controlling how much of the photoactive area of the sensor should be sacrificed to provide EVS functionality given that an increase in the amount of pixel circuits used to provide EVS functionality can correspond to a degradation in SNR of the CIS data stream.

The present technology addresses these challenges by providing hybrid image sensor systems that can dynamically reconfigure pixel functionality between CIS and EVS modes based on detected scene characteristics, such as (i) the presence (or absence) of motion within the scene and/or (ii) luminance conditions. In various embodiments, the hybrid image sensor systems include pixel circuits that can be selectively switched between operating as CIS pixel circuits or EVS pixel circuits (e.g., through mode switch circuits). The systems can implement motion detection algorithms that analyze successive image frames to determine whether static or dynamic scenes are present, and can automatically switch corresponding image sensors between a CIS-only mode for static scenes and a hybrid mode for dynamic scenes. When operating in a hybrid mode, the systems can further determine optimal pixel circuit allocation ratios between EVS and CIS functionality based on ambient luminance levels, with higher luminance conditions requiring fewer EVS pixel circuits due to improved EVS latency performance under bright lighting conditions.

The dynamic reconfiguration capability enables the hybrid image sensor systems to optimize performance across varying scene conditions while addressing the tradeoffs between signal-to-noise ratio, latency performance, and photoactive area utilization. For example, the systems can allocate 50% (or more) of pixel circuits in an array to EVS functionality under low luminance conditions to maintain adequate event detection sensitivity, while reducing EVS pixel circuit allocation to as low as 6.25% (or lower) under high luminance conditions to preserve CIS image quality. This adaptive approach is expected to improve or maximize photoactive area utilization for conventional imaging when motion is not detected, while also providing appropriate event-based sensing capabilities when motion is present. The present technology is thereby expected to provide improved overall system performance by automatically balancing the competing demands of EVS latency and CIS signal-to-noise ratio based on real-time scene analysis.

### B. Selected Embodiments of Hybrid Image Sensors, and Associated Systems, Devices, and Methods

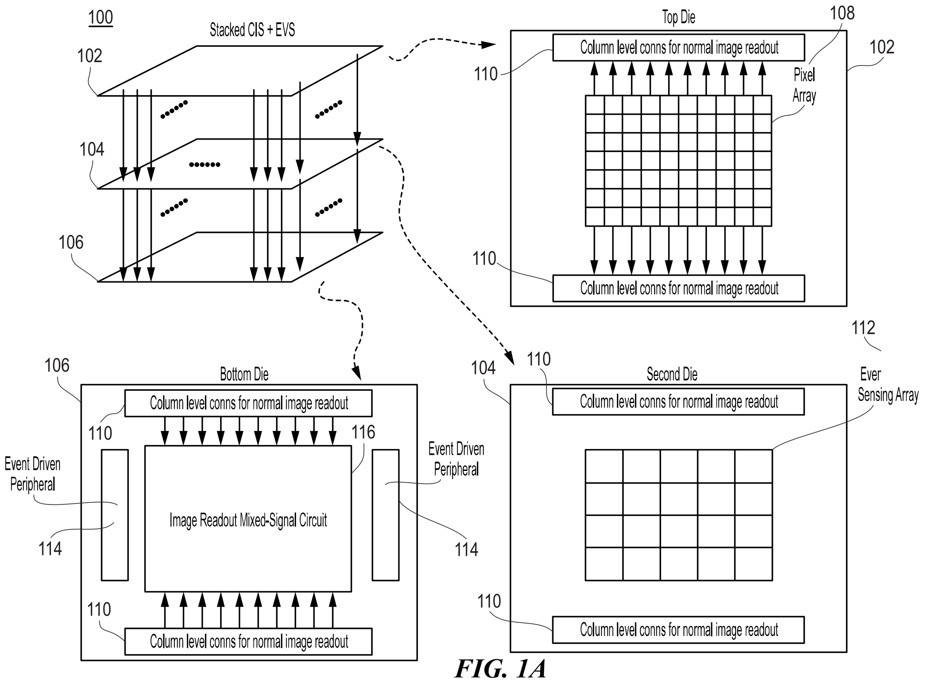

**FIG. 1A** is a partially schematic diagram of a stacked, hybrid CIS/EVS system 100 ("the stacked system 100") configured in accordance with various embodiments of the present technology. As shown, the stacked system 100 includes a first die 102, a second die 104, and a third die 106 that are stacked and coupled together in a stacked chip scheme. In some embodiments, the first die 102, the second die 104, and the third die 106 are semiconductor dies that include a suitable semiconductor material (e.g., silicon). In the illustrated embodiment, the first die 102 (also referred to herein as the "top die") includes a pixel circuit array 108. The third die 106 (also referred to herein as the "bottom die") includes an image readout circuit 116 (also referred to herein as "image readout mixed-signal circuitry"). The image readout circuit 116 can be coupled to the pixel circuit array 108 of the top die 102 through column level connections for normal image readout 110 (*e.g.,* for intensity or luminance signal readout). In some embodiments, the column level connections for normal image readout 110 are implemented from column bitlines of the pixel circuit array 108 with through silicon vias (TSVs) that extend between the top die 102 and the bottom die 106, and that are routed through the second die 104.

In some embodiments, the pixel circuit array 108 is a two-dimensional (2D) array including a plurality of pixel circuit (also referred to as "pixels" or as "pixel cells") that each includes at least one photosensor (*e.g*., at least one photodiode) exposed to incident light. As shown in the illustrated embodiment, the pixel circuits are arranged into rows and columns. As discussed further herein, pixel circuits of the pixel circuit array 108 can be operated at least partially as CIS pixel circuits and/or at least partially as EVS pixel circuits. When operated at least partially as CIS pixel circuits, photosensors of the pixel circuits can be used to acquire image data of a person, place, object, etc., which can then be used to render images and/or video of a person, place, object, etc. For example, each pixel circuit, when at least partially operated in a CIS mode, can include one or more photosensors configured to photogenerate image charge in response to the incident light. After each pixel circuit that is at least partially operated in a CIS mode has acquired its image charge, the corresponding analog image charge data can be read out by the image readout circuit 116 in the bottom die 106 through the column bit lines. In some embodiments, the image charge from each row of the pixel circuit array 108 may be read out in parallel through column bit lines by the image readout circuit 116.

The image readout circuit 116 in the bottom die 106 can include amplifiers, analog to digital converter (ADC) circuitry, associated analog support circuitry, associated digital support circuitry, etc., for normal image readout and processing. In some embodiments, the image readout circuit 116 may also include event driven readout circuitry, which will be described in greater detail below. In operation, the photogenerated analog image charge signals are read out from the pixel circuits of pixel circuit array 108, amplified, and converted to digital values in the image readout circuit 116. In some embodiments, image readout circuit 116 may read out a row of image data at a time. In other examples, the image readout circuit 116 may read out the image data using a variety of other techniques (not illustrated), such as a serial readout or a full parallel readout of all pixels simultaneously. The image data may be stored or even manipulated by applying post image effects (*e.g.,* crop, rotate, remove red eye, adjust brightness, adjust contrast, and the like).

In the illustrated embodiment, the second die 104 (also referred to herein as the "middle die") includes an event driven sensing array 112 that is coupled to the pixel circuit array 108 in the top die 102. In some embodiments, the event driven sensing array 112 is coupled to the pixel circuits of the pixel circuit array 108 through hybrid bonds between the top die 102 and the middle die 104. The event driven sensing array 112 can include an array of event driven circuits. In some embodiments, each one of the event driven circuits in the event driven sensing array 112 is coupled to at least one of the plurality of pixel circuits of the pixel circuit array 108 through hybrid bonds between the top die 102 and the middle die 104 to asynchronously detect events that occur in light that is incident upon the pixel circuit array 108 in accordance with the teachings of the present disclosure.

As discussed above, pixel circuits of the pixel circuit array 108 can be operated at least partially as EVS pixel circuits. When operated at least partially as EVS pixel circuits, photosensors of the pixel circuits can be used to track changes in the intensity of light incident on the photosensors from an external scene. In particular, the photosensors can photogenerate image charge (electrons or holes) or photocurrent in response to the incident light from the external scene. The photogenerated image can then be provided, via an EVS connection such as a hybrid bond, to a coupled event driven circuit of the event driven sensing array 112. In some embodiments, the event driven circuit includes (i) a photocurrent-to-voltage converter coupled to the photosensor to convert photocurrent generated by the photosensor to a voltage; and (ii) a filter amplifier coupled to the photocurrent-to-voltage converter to generate a filtered and amplified signal in response to the voltage received from the photocurrent-to-voltage converter. The event driven circuit can further include a threshold comparison circuit to determine and generate event detection signals in response to events asynchronously detected in incident light received from the external scene. For example, the threshold comparison circuit may generate an event detection signal when a detected change in the pixel signal at the output of the filter amplifier relative to a reference pixel signal is greater than a predetermined voltage threshold value. It is appreciated that the described event driven readout circuit is one example implementation to read out event signals. Various implementations for readout circuitry and readout schemes for event vision sensor pixels are well known. Thus, details on circuitry and readout techniques for event driven circuits are largely omitted here for the sake of brevity and to avoid obscuring aspects of the present technology.

As discussed above, event detection signals are generated by the event driven circuits in the event driven sensing array 112. The event detection signals can be received and processed by event driven peripheral circuitry 114 that, in the illustrated embodiment, is positioned on the bottom die 106. In other embodiments, at least a portion of the event driven peripheral circuitry 114 can be positioned on the middle die 104, such as around the periphery of the event driven sensing array 112.

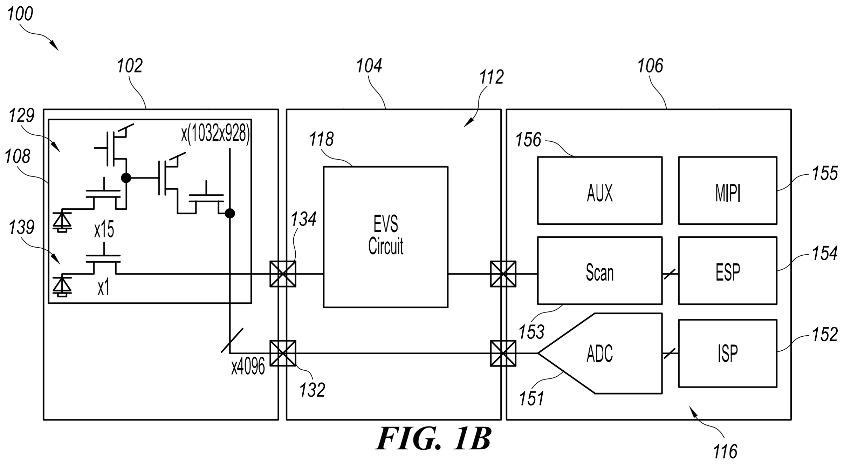

**FIG. 1B** is a partially schematic diagram of a specific example of the stacked system 100 of **FIG. 1A****.** As shown in **FIG. 1B****,** the stacked system 100 includes the pixel circuit array 108 on the first die 102 (only a portion of the pixel circuit array 108 is shown in **FIG. 1B****),** an event driven circuit 118 of the event driven sensing array 112 on the second die 104, and image readout circuitry 116 on the third die 106. The image readout circuitry 116 includes analog-to-digital converters 151 ("the ADC 151"), an image signal processor 152, scan readout circuitry 153, an event signal processor 154, a synchronous communications interface 155 (e.g., a mobility industry processor interfaces (MIPI) transmitter and/or receiver), and various auxiliary circuits 156.

The portion of the pixel circuit array 108 shown in **FIG. 1B** corresponds to a 4x4 cluster of pixel circuits (also referred to herein as a "pixel arrangement") in the pixel circuit array 108. Such a cluster can be repeated across the pixel circuit array 108. In the illustrated embodiment, fifteen (15) of the pixel circuits of the cluster are configured as active (CIS) pixel circuits 129 to capture CIS information (e.g., intensity information) corresponding to light incident on photosensors of those pixels. In addition, one of the pixel circuits of the cluster is configured as an EVS pixel circuit 139 to capture non-CIS information (e.g., contrast information, event data) corresponding to light incident on a photosensor of the EVS pixel circuit 139. In some embodiments, the CIS pixel circuits 129 of the cluster can be arranged in a Bayer pattern to capture CIS (frame) information corresponding to light incident on the cluster, and the EVS pixel circuit 139 can be arranged to detect EVS (asynchronous event) information corresponding to light incident on the cluster. The CIS pixel circuits 129 can be arranged in another pattern besides a Bayer pattern in other embodiments of the present technology.

The CIS pixel circuits 129 of the cluster and the EVS pixel circuit 139 of the cluster can be read out independently. More specifically, CIS information captured by the CIS pixel circuits 129 can be read out (i) through hybrid bonds 132 (e.g., pixel-level hybrid bonds) and/or the second die 104 to (ii) the ADC 151 on the third die 106 using corresponding row/column control circuitry (not shown). Non-CIS information captured by the EVS pixel circuit 139 can be read out through one or more hybrid bonds 134 (e.g., pixel-level hybrid bonds) to the event driven circuit 118 on the second die 104 using corresponding row/column control circuitry (not shown), and events detected by the event driven circuit 118 can be read out by the scan readout circuitry 153 on the third die 136 (e.g., through one or more corresponding hybrid bonds). The CIS information captured by the CIS pixel circuits 129 of the pixel circuit array 108 is frame-based and can be readout out from the CIS pixel circuits 129 row-by-row at the end of an exposure period. By contrast, the non-CIS information captured by the EVS pixel circuit 139 is used by the event driven circuit 118 to asynchronously detect/trigger events, and the events can be read out according to a row scan readout scheme or a column scan readout scheme.

In some embodiments, row/column control circuitry corresponding to the CIS pixel circuits 129 can be allocated on a same die as-or a different die from-the die (e.g., the third die 106) on which the ADC 151 is allocated. In these and other embodiments, row/column control circuitry corresponding to the EVS pixel circuits 139 can be allocated on a same die as-or a different die from-the die (e.g., the third die 106) on which the scan readout circuitry 153 is allocated. In these and still other embodiments, the ADC 151 and/or the row/column control circuitry corresponding to the CIS pixel circuits 129 can be allocated on a same die as-or a different die from-the die (e.g., the third die 106) on which the scan readout circuitry 153 and/or the row/column control circuitry corresponding to the EVS pixel(s) 139 is/are allocated.

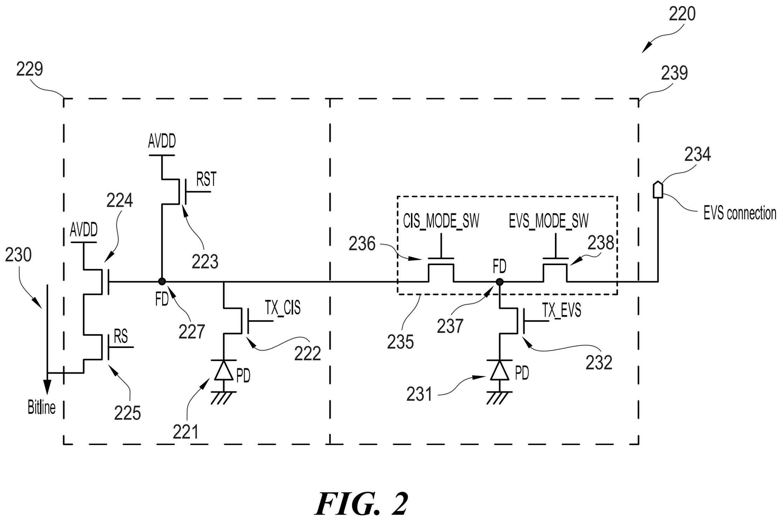

In the illustrated embodiment, the EVS pixel circuit 139 is dedicated to capturing non-CIS (EVS) information while the CIS pixel circuits 129 are dedicated to capturing CIS information. As described in greater detail below with reference to **FIG. 2****,** in some embodiments, the EVS pixel circuit 139 and/or one or more of the CIS pixel circuits 129 can be switched between being configured to capture CIS information and non-CIS information (also referred to herein as "event information," "contrast information," or "EVS information"). This can enable the stacked system 100 to operate in a CIS-only mode in which all of the pixel circuits 129 and the pixel circuit 139 are used to capture CIS information, an EVS-only mode in which all of the pixel circuits 129 and the pixel circuit 139 are used to capture non-CIS (EVS) information, and/or a hybrid CIS and EVS mode in which a first subset of the pixel circuits 129, 139 are used to capture CIS information and a second subset of the pixel circuits 129, 139 are used to capture non-CIS (EVS) information.

In some embodiments, the event driven circuit 118 on the second die 104 has a same die size as the 4x4 pixel cluster on the first die 102. In other embodiments, the event driven circuit 118 can have a different die size from the 4x4 pixel cluster. Additionally, or alternatively, although the ratio of CIS pixel circuits to EVS pixel circuits is 15:1 in the 4x4 pixel cluster, other ratios of CIS pixel circuits to EVS pixel circuits (e.g., 14:2, 12:4, 8:8, 4:12, 2:14, 15:1) are possible and fall within the scope of the present technology. Moreover, although the EVS pixel circuit 139 of **FIG. 1B** corresponds to a 4x4 pixel cluster, other arrangements (e.g., an EVS pixel circuit corresponding to 1X1 pixels clusters, 4X2 pixel clusters, etc.) are possible and within the scope of the present technology. Furthermore, although one row of EVS pixel circuits (e.g., the row including the EVS pixel circuit 139) corresponds to four rows of CIS pixel circuits in **FIG. 1B****,** other arrangements are possible and within the scope of the present technology. For example, each row of EVS pixel circuits can correspond to (a) one row of CIS pixel circuits, (b) to two rows of CIS pixel circuits, (c) to three rows of CIS pixel circuits, or (d) to more than four rows of CIS pixel circuits.

**FIG. 2** is a partially schematic circuit diagram of a pixel circuit 220 configured in accordance with various embodiments of the present technology. The pixel circuit 220 includes two pixels: a first pixel 229 and a second pixel 239. The pixel circuit 220 may be an example of one of the pixel circuits of the pixel circuit array 108 of **FIG. 1****,** or of another pixel circuit configured in accordance with various embodiments of the present technology. In the illustrated embodiment, the first pixel 229 includes a photosensor 221 (*e.g.,* a photodiode), a floating diffusion 227, and (optionally) a transfer transistor 222 selectively coupling the photosensor 221 to the floating diffusion 227 based at least in part on a transfer control signal TX_CIS. The photosensor 221 is configured to photogenerate image charge in response to incident light, and the floating diffusion 227 is configured to receive image charge from the photosensor 221 at least when (a) the transfer transistor 222 is selectively activated using the transfer control signal TX_CIS or (b) the transfer transistor 222 is omitted.

The first pixel 229 further includes a reset transistor 223, a source follower transistor 224, and a row select transistor 225. The reset transistor 223 can selectively couple the floating diffusion 227 to a voltage source (*e.g.,* for reset operations) based at least in part on a reset signal RST. The source follower transistor 224 includes a gate terminal coupled to the floating diffusion 227. The source follower transistor 224 is also coupled between (i) a voltage source (*e.g*., the same voltage source as-or a different voltage source from-the voltage source to which the reset transistor 223 is coupled) and (ii) the row select transistor 225. The row select transistor 225 is (a) coupled between the source follower transistor 224 and a bitline 230, and (b) is selectively activated based at least in part on a row select signal RS.

Referring now to the second pixel 239 of **FIG. 2****,** the second pixel 239 includes a photosensor 231 (*e.g.,* a photodiode) a floating diffusion 237, and (optionally) a transfer transistor 232 selectively coupling the photosensor 231 to the floating diffusion 237 based at least in part on a transfer control signal TX_EVS. The photosensor 231 is configured to photogenerate image charge in response to incident light, and the floating diffusion 237 is configured to receive image charge from the photosensor 231 at least when (a) the transfer transistor 232 is selectively activated using the transfer control signal TX_EVS or (b) the transfer transistor 232 is omitted.

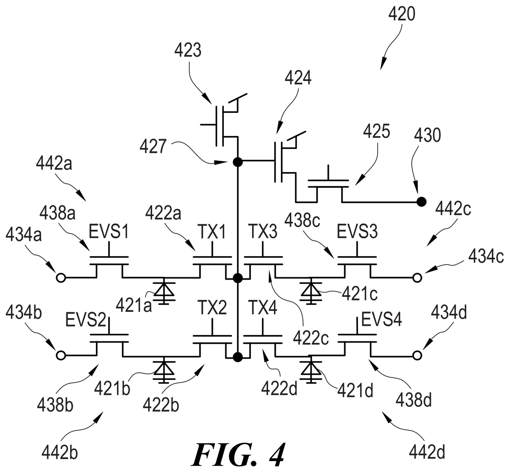

The first pixel 229 and the second pixel 239 of **FIG. 2** are each illustrated with a single photosensor 221 and 231, respectively. As described in greater detail below (e.g., with reference to **FIG. 4****),** either or both of the first pixel 229 and the second pixel 239 can include a different number of photosensors (*e.g*., two, three, four, or more photosensors) in other embodiments of the present technology. As a specific example, either or both of the first pixel 229 and the second pixel 239 can be split photodiode pixels (*e.g*., usable for high dynamic range (HDR) applications).

The first pixel 229 and the second pixel 239 of **FIG. 2** are also each illustrated with a single control gate (transfer transistor 222 and 232, respectively). In other embodiments, either or both of the first pixel 229 and the second pixel 239 can include a different number of control gates (*e.g.,* two, three, four, or more transfer transistors). For example, the first pixel 229 and/or the second pixel 239 can include one or more transfer transistors for each of their photosensors. As another example, the first pixel 229 and/or the second pixel 239 can include a fewer number of transfer transistors than photosensors (e.g., one transfer transistor for two or more photosensors).

Furthermore, the first pixel 229 of **FIG. 2** is illustrated with one floating diffusion (floating diffusion 227), and the second pixel 239 of **FIG. 2** is illustrated with one floating diffusion (floating diffusion 237). For example, the first pixel 229 and the second pixel 239 are each illustrated with 1x1 pixel architectures in which a single floating diffusion 227 and 237, respectively, is coupled to (or selectively coupled to) a single photosensor 221 and 231, respectively. In other embodiments, the first pixel 229 and/or the second pixel 239 can include more than one floating diffusion and/or a different number of photosensors coupled to each floating diffusion. For example, a floating diffusion can be shared by (*e.g.,* be coupled or selectively coupled to) one or more photosensors, such as one photosensor, two photosensors, three photosensors, four photosensors, *etc.* As another example, multiple floating diffusions can share (*e.g*., be coupled to or selectively coupled to) a same photodiode. As such, the first pixel 229 and/or the second pixel 239 can be configured with any pixel architecture, such as 1x2, 2x1, 1x3, 3x1, 2x2, 3x3, 4x4, among others.

Moreover, the pixel circuit 220 of **FIG. 2** is illustrated as a 1x2 pixel circuit. In other embodiments, the first pixel 229 and the second pixel 239 can configured in a different pixel circuit, such as a 2x1 pixel circuit. In these and still other embodiments, the first pixel 229 and the second pixel 239 can be part of a larger pixel circuit. For example, the first pixel 229 and/or the second pixel 239 can be configured/arranged in a 1x3 pixel circuit, a 3x1 pixel circuit, a 2x2 pixel circuit, a 3x3 pixel circuit, a 4x4 pixel circuit, or another suitable pixel circuit.

In the embodiment illustrated in **FIG. 2****,** the pixel circuit 220 further includes a mode switch circuit 235 (also referred to herein as a "mode switch"). As shown, the mode switch circuit 235 includes a first switch 236 (also referred to herein as a "CIS switch," a "CIS mode switch," a "first mode switch," and the like) and a second switch 238 (also referred to herein as an "EVS switch," an "EVS mode switch," a "second mode switch", and the like). The first switch 236 (*e.g.,* a transistor, a standard switch, *etc*.) is configured to selectively couple the second pixel 239 to the first pixel 229. For example, the first switch 236 is configured to selectively couple the floating diffusion 237 of the second pixel 239 to the floating diffusion 227 of the first pixel 229 based at least in part on a first switch control signal CIS_MODE_SW. As a specific example, the first switch 236 can be electrically positioned between the floating diffusion 237 of the second pixel 239 and the floating diffusion 227 of the first pixel 229. Thus, when the first switch 236 is activated (*e.g*., turns on), charge accumulated on the floating diffusion 237 can be applied to the gate of the source follower transistor 224 such that a corresponding analog signal can be read out onto the bitline 230 via the row select transistor 225 (*e.g*., when the row select transistor 225 is activated based at least in part on the row select signal RS and/or when the reset transistor 223 is deactivated based at least in part on the reset signal RST). In other words, activation of the first switch 236 (*e.g*., when the second switch 238 is turned off or is not activated) can facilitate reading out the second pixel 239 via the readout circuitry of the first pixel 229. Stated another way, activation of the first switch 236 (*e.g*., when the second switch 238 is not activated) can facilitate reading out intensity information (*e.g*., a CIS image signal) onto the bitline 230 from either or both of the first pixel 229 and the second pixel 239.

The second switch 238 (*e.g.,* a transistor, a standard switch, *etc*.) of the mode switch circuit 235 is configured to selectively couple the second pixel 239 to EVS readout circuitry (*e.g*., one of the event driven circuits included in the event driven sensing array 112 shown in **FIGS. 1A** and/or **1B**) based at least in part on a second switch control signal EVS_MODE_SW. For example, the second switch 238 can be electrically positioned between the floating diffusion 237 of the second pixel 239 and EVS readout circuitry (*e.g*., on the second die 104 of **FIG. 1****),** such as between the floating diffusion 237 and an EVS connection 234 (e.g., a hybrid bond) coupling the second pixel 239 (*e.g.,* on the first die 102 of **FIGS. 1A** and/or **1B)** to a corresponding event driven circuit (*e.g.,* of an event driven sensing array 112 on the second die 104). As another example, the second switch 238 can be electrically positioned (i) such that the floating diffusion 237 is electrically positioned between the second switch 238 and the first switch 236, and/or (ii) such that the second switch 238 is coupled to the first switch 236 via the floating diffusion 237.

When the second switch 238 of the mode switch circuit 235 is activated, charge accumulated on the floating diffusion 237 can be transferred (via the EVS connection 234) to EVS readout circuitry corresponding to the second pixel 239. In addition, when both the first switch 236 and the second switch 238 are activated together, charge accumulated on the floating diffusion 227 of the first pixel 229 can also be transferred (via the EVS connection 234) to the EVS readout circuitry corresponding to the second pixel 239 (*e.g*., when the row select transistor 225 and/or the reset transistor 223 are also not activated). Stated another way, activation of the second switch 238 (*e.g.,* (a) when the first switch 236 is not activated and/or (b) when the first switch 236 is activated, the reset transistor 223 is not activated, and/or the row select transistor 225 is not activated) can facilitate generating contrast change (*e.g.,* an event signal) corresponding to either or both of the first pixel 229 and the second pixel 239.

The mode switch circuit 235 therefore facilitates operating the pixel circuit 220 in any one of three configurations: a CIS configuration (also referred to herein as a "first configuration") in which the first pixel 229 and/or the second pixel 239 of the pixel circuit 220 can be used to obtain CIS information (*e.g*., CIS image signals); a hybrid CIS and EVS configuration (also referred to herein as a "hybrid configuration" or a "third configuration") in which the pixel circuit 220 can be used to (*e.g.,* simultaneously) provide CIS information (*e.g.,* from the first pixel 229) and non-CIS information (*e.g.*, from the second pixel 239); and an EVS configuration (also referred to herein as a "second configuration") in which the first pixel 229 and/or the second pixel 239 can be used to obtain non-CIS information (*e.g.*, events signals corresponding to change in luminance, event detection, phase detection auto-focus, *etc*.). Stated another way, the mode switch is usable to transition the pixel circuit 220 between (a) one or more configurations (*e.g*., the CIS configuration and/or the hybrid configuration) in which the pixel circuit 220 is controllable to generate intensity information, luminance information, or CIS information (*e.g*., color information) output corresponding to light incident on the first pixel 229 and/or the second pixel 239, and (b) one or more configurations (*e.g*., the hybrid configuration and/or the EVS configuration) in which the pixel circuit 220 is controllable to generate contrast or other non-CIS information output corresponding to light incident on the first pixel 229 and/or the second pixel 239.

For example, by activating the first switch 236 of the mode switch circuit 235 while the second switch 238 is deactivated, charge accumulated on both the floating diffusion 227 of the first pixel 229 and the floating diffusion 237 of the second pixel 239 can be read out of the first pixel 229 onto the bitline 230 via the source follower transistor 224 and the row select transistor 225 of the first pixel 229 when the row select transistor 225 is activated using the row select signal RS. Thus, activation of the first switch 236 while the second switch 238 is not activated can correspond to a CIS configuration of the pixel circuit 220.

As another example, by leaving the first switch 236 of the mode switch circuit 235 deactivated, charge accumulated on the floating diffusion 227 of the first pixel 229 can be read out of the first pixel 229 onto the bitline 230 via the source follower transistor 224 and the row select transistor 225 of the first pixel 229 when the row select transistor 225 is activated using the row select signal RS. Charge accumulated on the floating diffusion 237 of the second pixel 239 can be discarded, such as via the second switch 238 of the mode switch circuit 235 and the EVS connection 234. In these embodiments, deactivation of the first switch 236 and discarding of the charge on the floating diffusion 237 of the second pixel 239 can correspond to a CIS configuration of the pixel circuit 220. Alternatively, charge accumulated on the floating diffusion 237 of the second pixel 239 can be (a) read out of the second pixel 239 via the second switch 238 of the mode switch circuit 235 and the EVS connection 234 and (b) used by a corresponding event driven circuit (not shown) as contrast information. In these embodiments, deactivation of the first switch 236 and use of the charge on the floating diffusion 237 of the second pixel 239 as contrast information can correspond to a hybrid configuration of the pixel circuit 220.

As still another example, by activating both the first switch 236 and the second switch 238 of the mode switch circuit 235, charge accumulated on the floating diffusion 227 of the first pixel 229 and charge accumulated on the floating diffusion 237 of the second pixel 239 can be read out of the second pixel 239 via the EVS connection 234 to a corresponding event drive circuit as contrast information. Thus, activation of the first switch 236 while the second switch 238 is activated can correspond to an EVS configuration of the pixel circuit 220.

As yet another example, by activating the second switch 236 of the mode switch circuit 235 while the first switch 236 is deactivated, charge accumulated on the floating diffusion 237 of the second pixel 239 can be (a) read out of the second pixel 239 via the second switch 238 of the mode switch circuit 235 and the EVS connection 234 and (b) used by a corresponding event driven circuit (not shown) as contrast information. Charge accumulated on the floating diffusion 227 of the first pixel 229 can be discarded, such as via (i) the reset transistor 223 and/or (ii) the source follower transistor 224 and the row select transistor 225. In these embodiments, deactivation of the first switch 236 while the second switch 238 and discarding of the charge on the floating diffusion 227 of the first pixel 229 is activated can correspond to an EVS configuration of the pixel circuit 220.

As discussed above, the pixel circuit 220 can be one pixel circuit in array of pixel circuits. In these embodiments, the reconfigurability of the pixel circuit 220 (and of other pixel circuits of the array) between a CIS configuration, an EVS configuration, and/or a hybrid configuration can facilitate operating the pixel circuit array (and therefore a corresponding image sensor) in different modes. For example, the reconfigurability of the pixel circuit 220 (and of other pixel circuits of the array) between a CIS configuration, an EVS configuration, and/or a hybrid configuration can facilitate operating the pixel circuit array (or subsets thereof-also referred to herein as "pixel arrangements" or "subunits") in one of three operating modes: a CIS-only mode (also referred to herein as a "first mode") in which all pixel circuits of the array (including the pixel circuit 220) are operated in a CIS configuration to capture conventional image data; a hybrid mode (also referred to herein as a "second mode") in which a first subset of the pixel circuits (which may or may not include the pixel circuit 220) of the array are operated in a CIS configuration to capture conventional image data while a second subset of the pixel circuits (which may or may not include the pixel circuit 220) of the array are operated in an EVS configuration or a hybrid configuration to capture contrast/event information; and an EVS-only mode (also referred to herein as a "third mode") in which all pixel circuits of the array (including the pixel circuit 220) are operated in an EVS configuration to capture contrast/event information.

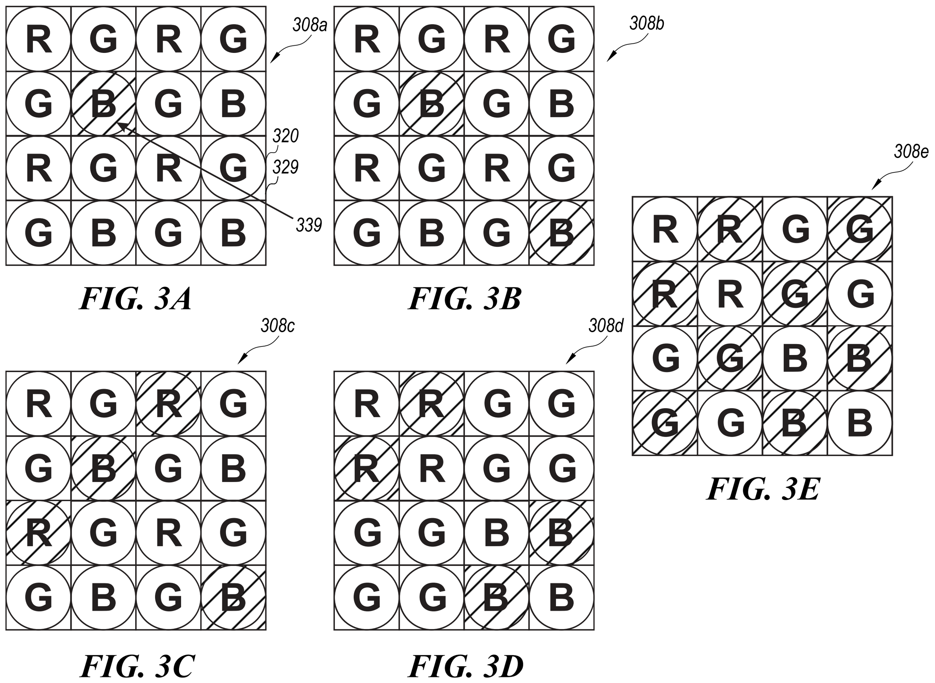

**FIGS. 3A-3E** illustrate multiple pixel arrangements 308a-308e configured in accordance with various embodiments of the present technology. Each of the pixel arrangements 308a-308e can be part of a larger pixel circuit array, such as the pixel circuit array 108 of **FIGS. 1A** and/or **1B** or another pixel circuit array configured in accordance with various embodiments of the present technology. In the illustrated embodiments, each of the pixel arrangements 308a-308e includes 16 pixel circuits 320 that (a) are arranged in a 4x4 grid and (b) are each reconfigurable between a CIS configuration, an EVS configuration, and/or a hybrid configuration. In some embodiments, the pixel circuits 320 can be generally similar to the pixel circuit 220 of **FIG. 2** or to other pixel circuits of the present technology described herein, such as the pixel circuit 420 described in detail below with reference to **FIG. 4****.** The pixel arrangements 308a-308c are arranged in a Bayer pattern at a pixel level, and the pixel arrangements 308d and 308e are arranged in a Bayer pattern at a subunit level (with each subunit including a 2x2 grid of pixels). Furthermore, each of the pixel arrangements 308a-308e reflects a ratio of EVS pixel circuits to CIS pixel circuits that can be employed while a corresponding image sensor is operated in a hybrid mode. More specifically, the pixel arrangements 308a-308e demonstrate different patterns of pixel allocation between EVS pixel circuits 339 and CIS pixel circuits 329 corresponding to the hybrid mode, with (i) cross-hatched regions indicating pixel circuits 320 that are configured as EVS pixel circuits 339 while the image sensor is operated in the hybrid mode and (ii) non-cross-hatched regions indicating pixel circuits 320 that are configured as CIS pixel circuits 329 while the image sensor is operated in the hybrid mode. Thus, the pixel arrangements 308a-308e show how, while an image sensor is operated in a hybrid mode, EVS pixel circuits 339 can be distributed across a corresponding sensor array to achieve different ratios of EVS to CIS functionality.

Referring to **FIG. 3A****,** the illustrated pixel arrangement 308a demonstrates a 1/16 pattern configuration in which, when a corresponding image sensor is operated in a hybrid mode, one pixel circuit 320 out of the sixteen pixel circuits 320 of the pixel arrangement 308a can be switched to provide photocurrent for EVS functionality while the remaining fifteen pixel circuits 320 operate as the CIS pixel circuits 329. More specifically, when the corresponding image sensor is operated in a first (CIS-only) mode, all sixteen of the illustrated pixel circuits 320 of the pixel arrangement 308a can be configured and operated as CIS pixel circuits 329 to capture conventional image data. When the corresponding image sensor is operated in a second (hybrid) mode, one pixel circuit 320 from the Bayer pattern (a blue pixel in the illustrated example) can be reconfigured (e.g., switched) to function as an EVS pixel circuit 339 to provide photocurrent for EVS functionality while the remaining fifteen pixel circuits 320 continue to operate as the CIS pixels 329. The pixel arrangement 308a thereby provides a configuration in which, while the image sensor is operated in the hybrid mode, approximately 6.25% of the photoactive area can be allocated to EVS functionality while 93.75% remains allocated to CIS functionality. As discussed in greater detail below, this ratio of EVS pixel circuits to CIS pixel circuits can be suitable for very high luminance conditions where EVS latency performance can be maintained with little sacrifice of CIS image quality.

Referring to **FIG. 3B****,** the pixel arrangement 308b shows a 2/16 pattern configuration in which two pixel circuits 320 out of the sixteen pixel circuits 320 can be switched to provide photocurrent for EVS functionality while the remaining fourteen pixel circuits 320 operate as the CIS pixel circuits 329. More specifically, when the corresponding image sensor is operated in the first (CIS-only) mode, all sixteen pixel circuits 320 of the pixel arrangement 308b can be operated as the CIS pixel circuits 329. When the corresponding image sensor is operated in the second (hybrid) mode, two pixel circuits 320 from the Bayer pattern (two blue pixels in the illustrated example) can be switched to function as EVS pixel circuits 339 while the remaining fourteen pixel circuits 320 continue to operate as CIS pixel circuits 329. The pixel arrangement 308b provides a configuration in which, while the image sensor is operated in the hybrid mode, approximately 12.5% of the photoactive area can be allocated to EVS functionality while 87.5% remains dedicated to CIS functionality. As discussed in greater detail below, this ratio of EVS pixel circuits to CIS pixel circuits can be suitable for high luminance conditions where EVS latency performance can be maintained with relatively little sacrifice of CIS image quality.

Referring to **FIGS. 3C** and **3D****,** the pixel arrangements 308c and 308d each illustrate a 4/16 pattern configuration in which four pixel circuits 320 out of the sixteen pixel circuits 320 can be switched to provide photocurrent for EVS functionality while the remaining twelve pixel circuits 320 operate as CIS pixel circuits 329. More specifically, when the corresponding image sensor is operated in the first (CIS-only) mode, all sixteen pixel circuits 320 of the pixel arrangements 308c and 308d can be operated as CIS pixel circuits 329. When the corresponding image sensor is operated in the second (hybrid) mode, four pixel circuits 320 from the Bayer pattern (two blue pixels and two red pixels in each of the illustrated examples) can be switched to function as the EVS pixel circuits 339 while the remaining twelve pixel circuits 320 continue to operate as CIS pixel circuits 329. Both the pixel arrangements 308c and 308d provide configurations where 25% of the photoactive area can be allocated to EVS functionality while 75% remains allocated to CIS functionality, which can be suitable for medium luminance conditions (as discussed in greater detail below).

As shown in **FIG. 3E****,** the pixel arrangement 308e demonstrates an 8/16 pattern configuration in which eight pixel circuits 320 out of the sixteen pixel circuits 320 can be switched to provide photocurrent for EVS functionality while the remaining eight pixel circuits 320 operate as CIS pixel circuits 329. More specifically, when the corresponding image sensor is operated in the first (CIS-only) mode, all sixteen pixel circuits 320 of the pixel arrangement 308e can be operated as CIS pixel circuits 329. When the corresponding image sensor is operated in the second (hybrid) mode, eight pixel circuits 320 from the Bayer pattern (two blue pixels, two red pixels, and four green pixels in the illustrated example) can be switched to function as EVS pixel circuits 339 to provide EVS functionality while the remaining eight pixel circuits 320 continue to operate as the CIS pixel circuits 329. The pixel arrangement 308e therefore provides a configuration where 50% of the photoactive area can be allocated to EVS functionality while 50% remains allocated to CIS functionality. This balanced allocation can be suitable for low luminance conditions where increased EVS pixel density can be beneficial for providing adequate event detection sensitivity under low luminance conditions.

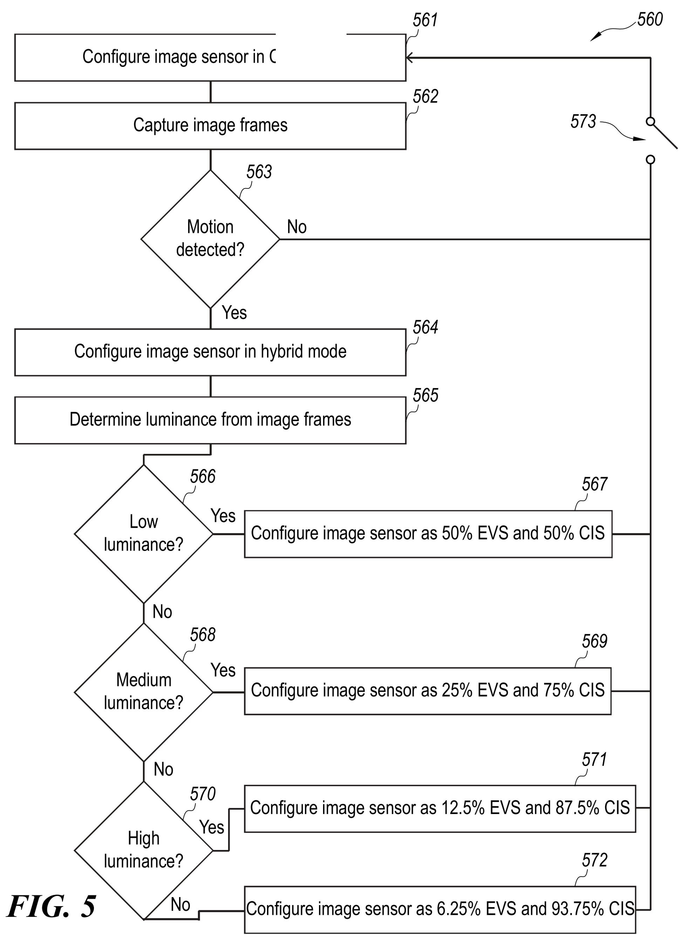

The various pixel arrangements 308a-308e therefore demonstrate how the reconfigurability of pixel circuits (e.g., via mode switch circuits, such as the mode switch circuit 235 described above with reference to **FIG. 2****)** can be leveraged to achieve different allocation ratios between EVS and CIS functionality across a pixel array of an image sensor. In some embodiments, an image sensor can switch between utilizing (a) one of the pixel arrangements 308a-308c or one of the pixel arrangements 308d or 308e for a first instance of operating in a hybrid mode and (b) another of the pixel arrangements 308a-308c or another of the pixel arrangements 308d or 308e, respectively, for a second instance of operating in the hybrid mode. Such flexibility to reconfigure between different ones of the pixel arrangements 308a-308c or different ones of the pixel arrangements 308d and 308e can enable dynamic optimization of sensor performance based on scene characteristics such as motion detection and luminance levels, as will be described in greater detail with reference to **FIGS. 5-14B****.**

As discussed above with reference to **FIG. 2****,** pixel circuits configured in accordance with the present technology can include any number of photosensors, any number of floating diffusions, and any number of control gates (e.g., transfer transistors and/or mode switch circuits). One example is shown in **FIG. 4****.** More specifically, **FIG. 4** illustrates a circuit diagram of a multi-subpixel pixel circuit 420 configured in accordance with various embodiments of the present technology. The pixel circuit 420 can be an example of one of the pixel circuits of the pixel circuit array 108 of **FIG. 1****,** or of other pixel circuits configured in accordance with various embodiments of the present technology.

As shown, the pixel circuit 420 includes four photosensors 421a-421d, four CIS transfer transistors 422a-422d (also referred to herein as "first switches"), four EVS transfer transistors 438a-438d (also referred to herein as "second switches"), a reset transistor 423, a floating diffusion 427, a source follower transistor 424, and a row select transistor 425. The photosensors 421a-421d, the CIS transfer transistors 422a-422d, and the EVS transfer transistors 438a-438d are arranged in four subpixels, namely a first subpixel 442a, a second subpixel 442b, a third subpixel 442c, and a fourth subpixel 442d. In particular, each of the subpixels 442a-442d includes (a) a corresponding one of the photosensors 421a-421d and (b) a mode switch circuit formed of (i) a corresponding one of the CIS transfer transistors 422a-422d and (ii) a corresponding one of the EVS transfer transistors 438a-438d. The subpixels 442a-442d are arranged in a 2x2 architecture in the illustrated embodiment but can be arranged in other arrangements (e.g., 1x4, 4x1, etc.) in other embodiments of the present technology.

Each of the photosensors 421a-421d is configured to photogenerate image charge (*e.g.,* one or more electrons or holes) in response to light incident thereon. Each of the photosensors 421a-421d is selectively coupled to the floating diffusion 427 via a corresponding one of the CIS transfer transistors 422a-422d and based at least in part on a corresponding CIS transfer control signal TX1-TX4 applied to a gate of the corresponding one of the CIS transfer transistors 422a-422d. Thus, the four subpixels 442a-442d share the floating diffusion 427 of the pixel circuit 420. As such, image charge photogenerated by any one of the photosensors 421a-421d can be transferred to the floating diffusion 427 when the corresponding one of the CIS transfer transistors 422a-422d is activated, thereby permitting the image charge to (a) be binned with image charge photogenerated by one or more of the other photosensors 421a-421d and/or (b) be readout of the pixel circuit 420 onto a bitline 430 as CIS information (e.g., conventional image data) via the source follower transistor 424 and the row select transistor 425.

In addition, each of the photosensors 421a-421d is selectively coupled to a corresponding one of four EVS connections 434a-434d via a corresponding one of the EVS transfer transistor 438a-438d and based at least in part on a corresponding EVS transfer control signal EVS1-EVS4 applied to a gate of the corresponding one of the EVS transfer transistors 438a-438d. As such, image charge photogenerated by any one of the photosensors 421a-421d can be transferred as event/contrast information to a corresponding event driven circuit (not) shown via a corresponding one of the EVS connections 434a-434d when the corresponding one of the EVS transfer transistors 438a-438d is activated. In some embodiments, each of the EVS connections 434a-434d can be coupled to a different event driven circuit (not shown) than is coupled to the other ones of the EVS connections 434a-434d. In other embodiments, one or more of the EVS connections 434a-434d can be coupled to one another and/or coupled to a shared event driven circuit (not shown). In these embodiments, image charge read out as event/contrast information from two of more of the EVS connections 434a-434d that are coupled to a shared event driven circuit can be binned during the read out and supplied to the shared event driven circuit.

Additionally, or alternatively, EVS connections of multiple pixel circuits (e.g., one or more of the EVS connections 434a-434d of the pixel circuit 420 and one or more EVS connections of a neighboring pixel circuit 420) can share an EVS connection and/or can share an event driven circuit. For example, the floating diffusion 427 of the pixel circuit 420 can be positioned at a centralized location in a circuit layout of the pixel circuit 420, and the EVS connections 434a-434d can be positioned at corners of a circuit layout of the pixel circuit 420. Continuing with this example, the position of the EVS connections 434a-434d at corners of the circuit layout of the pixel circuit 420 can facilitate sharing the EVS connections 434a-434d with neighboring pixel circuits at adjacent corners of the circuit layouts of the neighboring pixel circuits. In these embodiments, image charge read out from the pixel circuit 420 and the neighboring pixel circuit as event/contrast information can be binned during read out and supplied to a same event driven circuit (e.g., via a same EVS connection 434).

Similar to the mode switch circuit 235 of the pixel circuit 220 of **FIG. 2****,** the mode switch circuits (formed using the CIS transfer transistors 422a-422d and the EVS transfer transistors 438a-438d) of the pixel circuit 420 of **FIG. 4** can be used to reconfigure the pixel arrangement between three different configurations: a CIS-only configuration, a hybrid configuration, and an EVS-only configuration. For example, the pixel circuit 420 can be operated in a CIS-only configuration (also referred to herein as a "first configuration") by activating one or more of the CIS transfer transistors 422a-422d to read out image charge photogenerated by corresponding ones of the photosensors 421a-421d as CMOS image data (e.g., conventional image data) via the source follower transistor 424 and the row select transistor 425. EVS transfer transistors 438a-438d corresponding to the one or more CIS transfer transistors 421a-421d are not activated for the CIS-only read out. Image charge photogenerated by the corresponding ones of the photosensors 421a-421d can be binned during read out or read out from the pixel circuit 420 separately. Image charge photogenerated by others of the photosensors 421a-421d that do not correspond to the one or more CIS transfer transistors 422a-422d (if any) can be discarded, such as through the reset transistor 423 or through corresponding ones of the EVS connections 434a-434d.

As another example, the pixel circuit 420 can be operated in an EVS-only configuration (also referred to herein as a "second configuration") by activating one or more of the EVS transfer transistors 438a-438d to read out image charge photogenerated by corresponding ones of the photosensors 421a-421d as event/contrast information to corresponding event driven circuits (not shown) via corresponding ones of the EVS connections 434a-434d. CIS transfer transistors 422a-422d corresponding to the one or more EVS transfer transistors 438a-438d are not activated for the EVS-only read out. Image charge photogenerated by the corresponding various ones of the photosensors 421a-421d can be binned together and/or with image charge read out from a neighboring pixel circuit during read out, or can be read out from the pixel circuit 420 to the corresponding event driven circuits separately. Image charge photogenerated by others of the photosensors 421a-421d that do not correspond to the one or more EVS transfer transistors 438a-438d (if any) can be discarded, such as through the reset transistor 423.

As still another example, the pixel circuit 420 can be operated in a hybrid configuration (also referred to herein as a "third configuration") by (i) activating a first subset of the CIS transfer transistors 422a-422d while leaving a corresponding first subset of the EVS transfer transistors 438a-438d deactivated and (ii) activating a second subset of the EVS transfer transistors 438a-438d while leaving a corresponding second subset of the CIS transfer transistors 422a-422d deactivated. Image charge photogenerated by a first subset of the photosensors 421a-421d corresponding to the first subset of the CIS transfer transistors 422a-422d can be read out from the pixel circuit 420 as CMOS image data via the floating diffusion 427, the source follower transistor 424, and the row select transistor 425. In addition, image charge photogenerated by a second subset of the photosensors 421a-421d corresponding to the second subset of the EVS transfer transistors 438a-438d can be read out from the pixel circuit 420 to corresponding event driven circuits as event/contrast information via corresponding ones of the EVS connections 434a-434d.

As discussed above, the pixel circuit 420 can be one pixel circuit in array of pixel circuits. In these embodiments, the reconfigurability of the pixel circuit 420 (and of other pixel circuits of the array) between a CIS configuration, an EVS configuration, and/or a hybrid configuration can facilitate operating the pixel circuit array (and therefore a corresponding image sensor) in different modes. For example, the reconfigurability of the pixel circuit 420 (and of other pixel circuits of the array) between a CIS configuration, an EVS configuration, and/or a hybrid configuration can facilitate operating the pixel circuit array (or subsets thereof-also referred to herein as "pixel arrangements" or "subunits") in one of three operating modes: a CIS-only mode (also referred to herein as a "first mode") in which all pixel circuits of the array (including the pixel circuit 420) are operated in a CIS configuration to capture conventional image data; a hybrid mode (also referred to herein as a "second mode") in which a first subset of the pixel circuits (which may or may not include the pixel circuit 420) of the array are operated in a CIS configuration to capture conventional image data while a second subset of the pixel circuits (which may or may not include the pixel circuit 420) of the array are operated in an EVS configuration or a hybrid configuration to capture contrast/event information; and an EVS-only mode (also referred to herein as a "third mode") in which all pixel circuits of the array (including the pixel circuit 420) are operated in an EVS configuration to capture contrast/event information.

The challenge then arises in (1) controlling when an image sensor is operated in a CIS-only mode versus when the sensor is operated in a hybrid mode or EVS mode, and (2) when the image sensor is operated in hybrid mode, controlling how much of the photoactive area of the sensor should be sacrificed to provide EVS functionality given that an increase in the amount of pixel circuits used to provide EVS functionality can correspond to a degradation in SNR of the CIS data stream. The present technology addresses these challenges by providing hybrid image sensor systems that can dynamically reconfigure pixel functionality between CIS and EVS modes based on detected scene characteristics, such as (i) the presence (or absence) of motion within the scene and/or (ii) luminance conditions.

**FIG. 5** is a flowchart of a method 560 of operating an image sensor in accordance with various embodiments of the present technology. For example, the method 560 can be a method for dynamically reconfiguring functionality of pixel circuits of a pixel array of the image sensor between a CIS configuration and an EVS configuration based at least in part on detected scene characteristics such as motion detection and luminance conditions. The method 560 is illustrated as a series of blocks or steps 561-572 and a switch 573. All or a subset of one or more of the steps 561-572 of the method 560 can be executed by various components or devices of a hybrid image sensor system (e.g., the stacked system 100 of **FIGS. 1A** and/or **1B),** such as a pixel circuit array (e.g., the pixel circuit array 108 of **FIGS. 1A** and/or **1B),** control circuitry, motion detection circuitry, and/or luminance detection circuitry. Additionally, or alternatively, all or a subset of one or more of the steps 561-572 of the method 560 can be executed by processing circuitry associated with the hybrid image sensor system, such as the image signal processor 152, the event signal processor 154, and/or other auxiliary circuitry 156 described above with reference to **FIG. 1B****.** Furthermore, all or a subset of any one or more of the steps 561-572 of the method 560 can be executed in accordance with the discussion above (e.g., with reference to **FIGS. 1A-4****)** and/or with the discussion below (e.g., with reference to **FIGS. 5-14B****).**

The method 560 begins at step 561 by configuring the hybrid image sensor system in a CIS-only mode. In the CIS-only mode, all pixel circuits of a pixel circuit array (e.g., the pixel circuit array 108 of **FIGS. 1A** and/or **1B)** are operated in a CIS configuration to capture conventional image data (also referred to herein as "intensity information"). For example, pixel circuits (e.g., similar to the pixel circuit 220 of **FIG. 2** and/or the pixel circuit 420 of **FIG. 4****)** can be configured such that their respective mode switch circuits direct photocurrent from photosensors to floating diffusions for CMOS image readout rather than to EVS connections for event-based processing. During this initial configuration, the hybrid image sensor system can operate similarly to a conventional CMOS image sensor, with an entirety of a photoactive area of the pixel circuit array allocated to capturing intensity information for frame-based image generation.

At step 562, the method 560 continues by capturing intensity image frames using the CIS functionality of the hybrid image sensor system (e.g., while the hybrid image sensor is in the CIS-only mode). The intensity frames can include a sequence or stream of CIS intensity frames c1, c2, c3, and so forth, where each frame represents captured image data from the pixel circuit array during a specific exposure period. The intensity frames are generated by reading out image charge from pixel circuits (configured in CIS mode) through their respective floating diffusions, source follower transistors, and row select transistors onto corresponding bitlines. Corresponding analog-to-digital converters 151 and the image signal processor 152 described above with reference to **FIG. 1B** can process the analog image signals to generate digital intensity frames.

At step 563, the method 560 continues by performing motion detection analysis on the intensity frames generated in step 562 to determine whether motion is detected in the imaged scene. For example, the motion detection analysis can determine whether the imaged scene is static or dynamic by analyzing successive image frames to identify changes in intensity patterns that indicate movement within the field of view of the hybrid image sensor. Motion detection can be based on intensity/luminance differences between successive (e.g., subsampled/binned) frames, such as between frames c1 and c2, between frames c2 and c3, and so forth. In some cases, the motion detection analysis can be performed on regions of interest (ROIs) within the intensity frames rather than on complete frames, or on binned versions of the intensity frames to reduce computational complexity. The motion detection circuitry can implement various algorithms for detecting motion, such as frame differencing, optical flow analysis, or background subtraction techniques. The motion detection analysis produces a determination of whether motion is present or absent in the captured scene. All or a subset of the motion detection analysis can be performed by a host device (e.g., an application processor) coupled to the hybrid image sensor and/or by the hybrid image sensor.

Following the motion detection analysis of step 563, the method 560 branches based on whether motion is detected in the intensity frames. If no motion is detected (step 563: No), indicating a static scene, the method 560 maintains the hybrid image sensor system in-or switches the hybrid image sensor system to-the CIS-only mode and proceeds to the switch 573. In the CIS-only mode, all pixel circuits continue to operate as CIS pixel circuits to capture conventional image data, maximizing the signal-to-noise ratio and image quality since no photoactive area is sacrificed for EVS functionality.

The switch 573 provides a control mechanism that can turn the reconfiguration process on or off, allowing the hybrid sensor to remain in the current CIS-only mode until the switch 573 is activated. When the switch 573 is activated (on), the method 560 can return to step 561 and thereafter repeat (a) capturing image frames (step 562) while the hybrid image sensor system is in the CIS-only mode and (b) performing motion detection analysis (step 563) to determine whether motion is detected in the captured image frames. When the switch 573 is deactivated (off), the hybrid image sensor system remains in CIS-only mode until the switch 573 is subsequently activated.

On the other hand, if motion is detected at step 563 (step 563: Yes), indicating a dynamic scene, the method 560 proceeds to step 564. At step 564, the method 560 continues by configuring the hybrid image sensor system in a hybrid mode. In the hybrid mode, a first subset of pixel circuits are operated in a CIS configuration to capture conventional image data while a second subset of pixel circuits are operated in an EVS configuration to capture event information (also referred to herein as "contrast information"). The transition to the hybrid mode recognizes that EVS functionality provides benefits for detecting and tracking changes in signal intensity that are characteristic of moving objects or dynamic scenes. The specific allocation of pixel circuits between CIS and EVS functionality in the hybrid mode can depend on luminance conditions in the imaged scene, as determined in subsequent steps of the method 560.

At step 565, the method 560 continues by determining luminance levels in the imaged scene. In some embodiments, determining luminance levels can include determining luminance levels from (e.g., RGB values in) the intensity frames c1, c2, c3, etc. captured at step 562. Additionally, or alternatively, determining luminance levels can include determining luminance levels using an ambient light sensor associated with the hybrid image sensor system. The luminance determination recognizes that EVS pixel latency performance is luminance dependent, with higher luminance conditions enabling faster event detection and therefore requiring fewer EVS pixel circuits to maintain adequate performance. The luminance analysis can involve calculating average intensity values across the intensity frames, analyzing histogram distributions of pixel intensities, or receiving direct measurements from ambient light sensing circuitry. Based on the determined luminance levels, the method 560 makes decisions about how much of the photoactive area of the image sensor should be sacrificed for EVS functionality, which directly corresponds to determining how many pixel circuits in the pixel circuit array should be allocated as EVS pixel circuits versus CIS pixel circuits. All or a subset of the process of determining luminance levels can be performed by a host device (e.g., an application processor) coupled to the hybrid image sensor and/or by the hybrid image sensor.

For example, after determining luminance levels in the imaged scene, the method 560 can proceed through a series of luminance-based decision steps to determine optimal pixel circuit allocation ratios between EVS and CIS functionality. All or a subset of the luminance-based decision steps can be performed by a host device (e.g., an application processor) coupled to the hybrid image sensor and/or by the hybrid image sensor. More specifically, at step 566, the method 560 evaluates whether the luminance levels determined at step 565 correspond to low luminance conditions. In some embodiments, determining whether the determined luminance levels from step 565 correspond to low luminance conditions can include comparing the determined luminance levels to (i) a first luminance threshold below which luminance levels can be classified as corresponding to low luminance conditions (e.g., so long as the determined luminance levels are greater than one or more luminance thresholds corresponding to even lower luminance conditions than luminance levels classified as low luminance conditions) and/or (ii) a first range of luminance levels that corresponds to low luminance conditions. Alternatively, determining whether the determined luminance levels from step 565 correspond to low luminance conditions can include comparing the determined luminance levels to (i) a first luminance threshold above which luminance levels can be classified as corresponding to low luminance conditions (e.g., so long as the determined luminance levels do not exceed one or more luminance thresholds corresponding to higher luminance conditions, such as one or more of the luminance thresholds described below with reference to steps 568 and 570) and/or (ii) a first range of luminance levels that corresponds to low luminance conditions. When the determined luminance levels correspond to low luminance conditions (step 566: Yes), the method 560 proceeds to step 567. At step 567, the method 560 continues by reconfiguring pixel circuits of the pixel circuit array such that 50% of the pixel circuits are allocated to EVS functionality and 50% are allocated to CIS functionality. This 50% EVS and 50% CIS ratio corresponds to a photoactive area division where half of the available photoactive area is sacrificed for EVS functionality. The high allocation of pixel circuits to EVS functionality under low luminance conditions compensates for the reduced EVS latency performance that occurs in dim lighting conditions, ensuring adequate event detection sensitivity when luminance levels are insufficient for optimal EVS pixel performance.

On the other hand, when the determined luminance levels from step 565 do not correspond to low luminance levels (step 566: No), the method 560 proceeds to step 568 to evaluate whether the determined luminance levels correspond to medium luminance conditions. In some embodiments, determining whether the determined luminance levels from step 565 correspond to medium luminance conditions can include comparing the determined luminance levels to (i) a second luminance threshold that is greater than the first luminance threshold described above with reference to step 566 (e.g., the first luminance threshold below which luminance levels can be classified as corresponding to low luminance conditions) and/or (ii) a second range of luminance levels that corresponds to medium luminance conditions. The second luminance threshold can correspond to a luminance value below which luminance levels can be classified as corresponding to medium luminance conditions (e.g., so long as the luminance levels are greater than the first luminance threshold below which luminance levels can be classified as corresponding to low luminance condition). Alternatively, determining whether the determined luminance levels from step 565 correspond to medium luminance conditions can include comparing the determined luminance levels to a second luminance threshold above which luminance levels can be classified as corresponding to medium luminance conditions (e.g., so long as the determined luminance levels do not exceed one or more luminance thresholds corresponding to higher luminance conditions, such as one or more of the luminance thresholds described below with reference to step 570) and/or (ii) a second range of luminance levels that corresponds to medium luminance conditions. In some embodiments, the second luminance threshold can be equal to the first luminance threshold described above with reference to step 566 (e.g., the first luminance threshold below which luminance levels can be classified as corresponding to low luminance conditions). When the determined luminance levels correspond to medium luminance conditions (step 568: Yes), the method 560 proceeds to step 569. At step 569, the method 560 continues by reconfiguring pixel circuits of the pixel circuit array such that 25% of the pixel circuits are allocated to EVS functionality and 75% are allocated to CIS functionality. This 25% EVS and 75% CIS ratio represents a balanced approach where a moderate portion of the photoactive area is sacrificed for EVS functionality while preserving a majority of the pixel circuits for capturing conventional image data. The reduced EVS allocation compared to low luminance conditions reflects the improved EVS latency performance available under medium luminance conditions relative to low luminance conditions, allowing fewer EVS pixel circuits to provide adequate event detection capabilities.

On the other hand, when the determined luminance levels from step 565 do not correspond to medium luminance conditions (step 568: No), the method 560 proceeds to step 570 to evaluate whether the determined luminance levels correspond to high luminance conditions. In some embodiments, determining whether the determined luminance levels from step 565 correspond to high luminance conditions can include comparing the determined luminance levels to (i) a third luminance threshold that is greater than the second luminance threshold described above with reference to step 568 (e.g., the second luminance threshold below which luminance levels can be classified as corresponding to medium luminance conditions) and/or (ii) a third range of luminance levels that correspond to high luminance conditions. The third luminance threshold can correspond to a luminance value below which luminance levels can be classified as corresponding to high luminance conditions (e.g., so long as the luminance levels are greater than the second luminance threshold below which luminance levels can be classified as corresponding to medium luminance condition). Additionally, or alternatively, the third luminance threshold can correspond to a luminance value above which luminance levels are classified as corresponding to very high (or extra high) luminance levels. Alternatively, determining whether the determined luminance levels from step 565 correspond to high luminance conditions can include comparing the determined luminance levels to a third luminance threshold above which luminance levels can be classified as corresponding to high luminance conditions (e.g., so long as the determined luminance levels do not exceed one or more luminance thresholds corresponding to higher luminance conditions, such as a luminance threshold above which luminance levels can be classified as corresponding to very high (or extra high) luminance levels) and/or (ii) a third range of luminance levels that corresponds to high luminance conditions. In some embodiments, the third luminance threshold can be equal to the second luminance threshold described above with reference to step 568 (e.g., the second luminance threshold below which luminance levels can be classified as corresponding to medium luminance conditions). When the determined luminance levels correspond to high luminance conditions (step 570: Yes), the method 560 proceeds to step 571. At step 571, the method 560 continues by reconfiguring pixel circuits of the pixel circuit array such that 12.5% of pixel circuits are allocated to EVS functionality and 87.5% are allocated to CIS functionality. This 12.5% EVS and 87.5% CIS ratio reduces the amount of photoactive area sacrificed for EVS functionality in comparison to steps 567 and 569 described above while maintaining sufficient event detection capability under bright lighting conditions. The reduced EVS allocation takes advantage of the enhanced EVS latency performance available under high luminance conditions, where fewer EVS pixel circuits can provide adequate event detection sensitivity.

On the other hand, when the determined luminance levels from step 565 do not correspond to high luminance conditions (step 570: No), the method 560 can (a) determine that the luminance levels determined at step 565 correspond to very high (or extra high) luminance levels and (b) proceed to step 572. In some embodiments, determining that the luminance levels determined at step 565 correspond to very high (or extra high) luminance levels can include comparing the determined luminance levels to (i) the third luminance threshold described above with reference to step 570 (e.g., the third luminance threshold below which luminance levels can be classified as corresponding to high luminance conditions) and/or (ii) a fourth range of luminance levels that corresponds to very high (or extra high) luminance conditions. Alternatively, determining whether the determined luminance levels from step 565 correspond to very high (or extra high) luminance conditions can include comparing the determined luminance levels to (i) a fourth luminance threshold that is greater than the third luminance threshold described above with reference to step 566 (e.g., the third luminance threshold above which luminance levels can be classified as corresponding to high luminance conditions) and/or (ii) a fourth range of luminance levels that corresponds to very high (or extra high) luminance conditions. The fourth luminance threshold can correspond to a luminance value below which luminance levels can be classified as corresponding to high luminance conditions (e.g., so long as the luminance levels are greater than the third luminance threshold above which luminance levels can be classified as corresponding to high luminance condition). Additionally, or alternatively, the fourth luminance threshold can correspond to the third luminance threshold described above with reference to step 570 and below which luminance levels can be classified as corresponding to high luminance conditions. At step 572, the method 560 continues by reconfiguring pixel circuits of the pixel circuit array such that 6.25% of pixel circuits are allocated to EVS functionality and 93.75% are allocated to CIS functionality. This 6.25% EVS and 93.75% CIS ratio represents an even smaller amount of the photoactive area sacrificed for EVS functionality in comparison to step 571, preserving a substantial majority of pixel circuits of the pixel circuit array for capturing CMOS image data while maintaining basic event detection capability. The minimal EVS allocation is appropriate for extra high luminance conditions where EVS latency performance is optimized, allowing very few EVS pixel circuits to provide sufficient event detection sensitivity. The specific thresholds for low luminance, medium luminance, high luminance, and extra high luminance conditions can be determined and configured within the control circuitry and associated algorithms based on the specific performance characteristics of the hybrid image sensor system and application requirements.

As shown in **FIG. 5****,** after completing any of steps 567, 569, 571, or 572, the method 560 can return to the switch 573. The switch 573 provides the same control mechanism described above, allowing the reconfiguration process to be turned on or off based on system requirements or user preferences. When the switch 573 is activated (on), the method 560 can return to step 561 to (a) configure the hybrid image sensor system in the CIS-only mode (step 561), (b) capture image frames (step 562), (c) and perform motion detection analysis on the captured image frame (step 563) to determine whether motion is present in the imaged scene. On the other hand, when the switch 573 is deactivated (off), and at least until the switch 573 is subsequently activated, the hybrid image sensor system can remain in the current hybrid mode configuration with the pixel circuit allocation determined by the most recent execution of steps 567, 569, 571, or 572. Alternatively, when the switch 573 is deactivated (off), and at least until the switch 573 is subsequently activated, the hybrid image sensor can remain in the hybrid mode configuration but can adjust the pixel circuit allocation determined by a previous execution of steps 567, 569, 571, or 572. As a specific example, after completing any of steps 567, 569, 571, or 572, the method 560 can return to step 565 to determine new luminance levels corresponding to the external scene, such as using (i) one or more image frames captured by pixel circuits of the hybrid image sensor that remain in the CIS configuration while the hybrid image sensor is in the current hybrid mode configuration and/or (ii) an ambient light sensor associated with the hybrid image sensor. Continuing with this example, assuming the new luminance levels corresponding to the external scene represent a change in luminance conditions within the external scene (e.g., between any one or more of low, medium, high, extra high, and/or extremely high luminance conditions), the method 560 can adjust the pixel circuit allocation for the hybrid mode via re-execution of one or more of the steps 566-572.

In some embodiments, activation of the switch 573 can be based at least in part on whether motion is detected in the external scene at step 563. For example, the switch 573 can be activated whenever motion is not detected in the external scene (step 563: No). In some embodiments, a determination of whether motion is detected in the external scene can be based at least in part on (i) frame differencing (e.g., from CIS intensity frames captured by pixel circuits configured in the CIS configuration) and/or (ii) an estimation of an event rate based on events detected by pixel circuits configured in the EVS configuration. As a first specific example, when the method 560 executes steps 561 and 562 and determines at step 563 that no motion is detected in the external scene, the switch 573 can be activated to return the method 560 to block 561 to (i) maintain the hybrid image sensor in the CIS-only mode and (ii) permit the method to re-execute steps 562 and 563. As another specific example, after completing any of steps 567, 569, 571, or 572, the method 560 can return to step 562 to (i) capture image frames corresponding to the external scene using pixel circuits configured in the CIS configuration and (ii) capture event information corresponding to the external scene using pixel circuits configured in the EVS configuration. The method 560 can proceed to step 563 to determine whether motion is present in the external scene, such as by performing motion detection analysis on the captured images frames and/or the captured event information. In the event that motion is detected in the external scene (step 563: Yes), the method 560 can maintain the hybrid image sensor in the hybrid mode (step 564) and/or can maintain or adjust the pixel circuit allocation for the hybrid mode via re-executtion of one or more of the steps 566-572. On the other hand, in the event that motion is not detected in the external scene (step 563: No), the switch 573 can be activated such that the method 560 can return to step 561 to switch the hybrid image sensor from the hybrid mode to the CIS-only mode. Thereafter, the method 560 can proceed to re-execute steps 562 and 563 in accordance with the description provided above.

The control mechanisms described above that are provided by the switch 573 are expected to provide flexibility for applications that require either continuous adaptive reconfiguration or stable operation in a determined configuration. In addition, permitting multiple iterations of the method 560 is expected to enable continuous adaptation to changing scene conditions.

Although the steps 561-572 of the method 560 are discussed and illustrated in a particular order, the method 560 of **FIG. 5** is not so limited. In other embodiments, all or a subset of one or more of the steps 561-572 of the method 560 can be performed in a different order. In these and other embodiments, all or a subset of any of the steps 561-572 of the method 560 can be performed before, during, and/or after all or a subset of any of the other steps 561-572 of the method 560. For example, all or a portion of steps 566/567, all or a portion of steps 568/569, all or a portion of steps 570/571, and/or all or a portion of step 572 can be performed in any order such that all or a portion of any one or more of these steps can be performed before, during, and/or after all or portion of any one or more of other ones of these steps. Furthermore, a person skilled in the art will readily recognize that the method 560 can be altered and still remain within these and other embodiments of the present technology. For example, all or a subset of one or more steps 561-572 of the method 560 can be omitted and/or repeated in some embodiments. As another example, the method 560 can simultaneously or sequentially (a) compare luminance levels determined at step 565 (i) to an extremely high luminance threshold that corresponds to a luminance level above which luminance levels are classified as corresponding to extremely high luminance levels and/or (ii) to a range of luminance levels that corresponds to extremely high luminance levels, (b) compare luminance levels determined at step 565 (i) to high luminance threshold that corresponds to a luminance level above which luminance levels are classified as corresponding to high luminance levels up to the extremely high luminance threshold and/or (ii) to a range of luminance levels that corresponds to high luminance levels, and (c) compare luminance levels determined at step 565 (i) to a medium luminance threshold that corresponds to a luminance level above which luminance levels are classified as corresponding to medium luminance levels up to the high luminance threshold and/or (ii) to a range of luminance levels that corresponds to medium luminance levels. Continuing with this example, the medium luminance threshold can correspond to a luminance level below which luminance levels are classified as corresponding to low luminance levels.

As still another example, the specific percentages provided for steps 567, 569, 571, and 572 (as well as other percentages described throughout the present disclosure) are provided as illustrative examples only and may vary in other embodiments of the present technology based on specific sensor characteristics, application requirements, and performance optimization criteria. In the various embodiments, however, the number of pixel circuits reconfigured to the EVS configuration for hybrid modes of hybrid image sensors of the present technology can be generally inversely related to luminance levels observed in external scenes imaged by the hybrid image sensors, with higher luminance conditions enabling fewer EVS pixel circuits to maintain adequate event detection performance while preserving more photoactive area for CIS functionality.

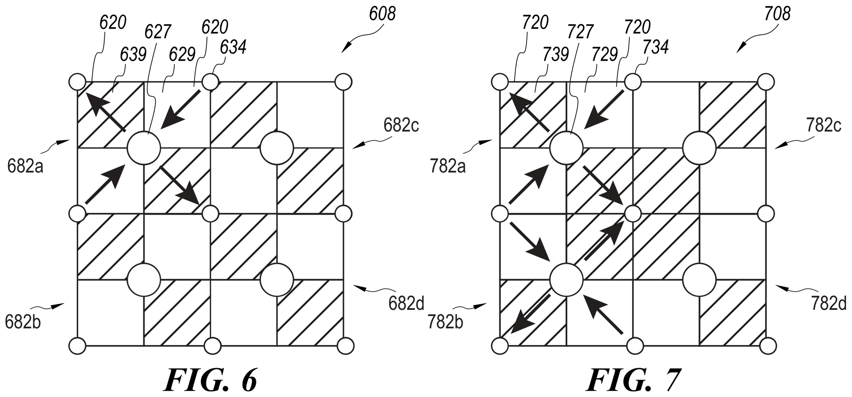

**FIGS. 6** and **7** illustrate example pixel arrangements 608 and 708, respectively, configured in accordance with various embodiments of the present technology. The pixel arrangements 608 and 708 illustrate example EVS pixel circuit to CIS pixel circuit allocations for low luminance conditions (e.g., corresponding to step 567 of the method 560 of **FIG. 5****).**

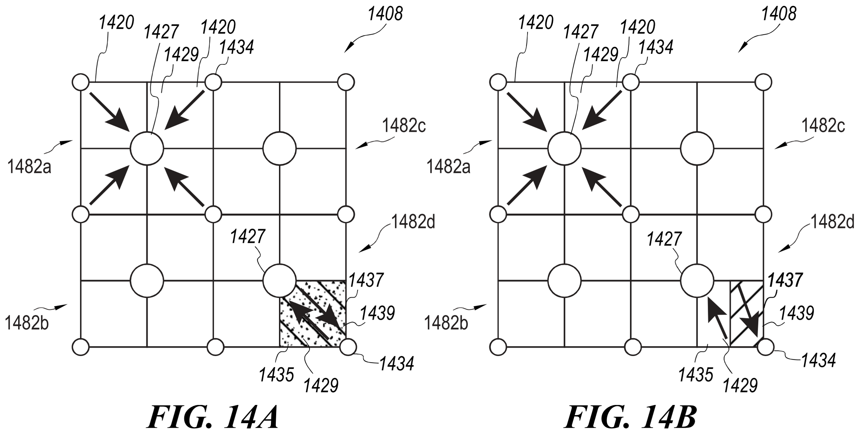

Referring to **FIG. 6****,** the pixel arrangement 608 includes 16 pixel circuits 620 organized into four pixel circuit subunits 682a-682d, with each subunit containing four of the pixel circuits 620. Each pixel circuit 620 can be switched between an EVS configuration and a CIS configuration. In some embodiments, as described in greater detail below with reference to **FIGS. 14A** and **14B****,** one or more of the pixel circuits 620 can be switched to a hybrid configuration. A CIS floating diffusion 627 is positioned at the center of each of the pixel circuit subunits 682a-682d. An EVS connection 634 is located at each corner of the pixel subunits 682a-682d, such that four EVS connections 634 are positioned about each pixel circuit subunit 682a-682d. For the pixel circuit arrangement 608, there are four CIS floating diffusions 627 and nine EVS connections 634. Each EVS connection 634 is connected to an event driven circuit (not shown) that can be used to detect events.

When a corresponding image sensor is operated in a hybrid mode and a pixel circuit 620 of the pixel circuit arrangement 608 is operated in a CIS configuration (and therefore configured as a CIS pixel circuit 629), photocurrent is directed to a corresponding CIS floating diffusion 627, as shown by arrows in **FIG. 6****.** A CIS pixel circuit 629 is represented as a white pixel in the illustrated embodiment. In addition, while the corresponding image sensor is operated in the hybrid mode and a pixel circuit 620 is operated in an EVS configuration (and therefore configured as an EVS pixel circuit 639), photocurrent is directed to a corresponding EVS connection 634, as shown by arrows in **FIG. 6****.** An EVS pixel circuit 639 is represented as a cross-hatched pixel in the illustrated embodiment. Arrows are shown for only the first subunit 682a in **FIG. 6** to avoid unnecessarily obscuring aspects of the present technology.

**FIG. 6** shows an example "50% EVS/50% CIS" allocation of pixel circuits 620 of the pixel arrangement 608, which can be used for low luminance conditions and/or can correspond to step 567 of the method 560 of **FIG. 5****.** More specifically, among the 16 pixel circuits 620, eight pixel circuits 620 are assigned as or switched to being operated as EVS pixel circuits 639 and eight pixel circuits 620 are assigned as or switched to being operated as CIS pixel circuits 629. Thus, in the illustrated embodiment, the CIS floating diffusion 627 of each of the pixel subunits 682a-682d receives photocurrent from two CIS pixel circuits 629. Each of the pixel circuit subunits 682a-682d also directs photocurrent from two pixel circuits 620 configured as EVS pixel circuits 639 to two EVS connections 634, which may be shared with neighboring pixel circuit subunits. As a result, photocurrent directed to a same EVS connection 634 from two different pixel circuits 620 of the eight EVS pixel circuits 639 may be binned in a corresponding event driven circuit (not shown).

**FIG. 7** shows an alternative example "50% EVS/50% CIS" allocation of pixel circuits 720 of a pixel arrangement 708, which can be used for low luminance conditions and/or can correspond to step 567 of the method 560 of **FIG. 5****.** In the illustrated embodiment, all or a subset of EVS connections 734 of the pixel circuit arrangement 708 receive photocurrent from four pixel circuits 720 configured as EVS pixel circuits 739. For example, the EVS connection 734 shown in the center of the pixel arrangement 708 can receive photocurrent from a pixel circuit 720 (configured as an EVS pixel circuit 739) of each of the four subunits 782a-782d. The EVS connections 734 at the corners of the pixel arrangement 708 can similarly receive photocurrent from four EVS pixel circuits 739 (three of which are not shown but may be included in pixel arrangements neighboring the pixel arrangement 708). As shown, four of the EVS connections 734 of the pixel arrangement 708 receive no photocurrent while the corresponding image sensor is operated in the hybrid mode. Thus, in this pixel arrangement 708, there may be a tradeoff between the magnitude of the photocurrent received at an EVS connection 734 and the sampling density of the active EVS connections 734.

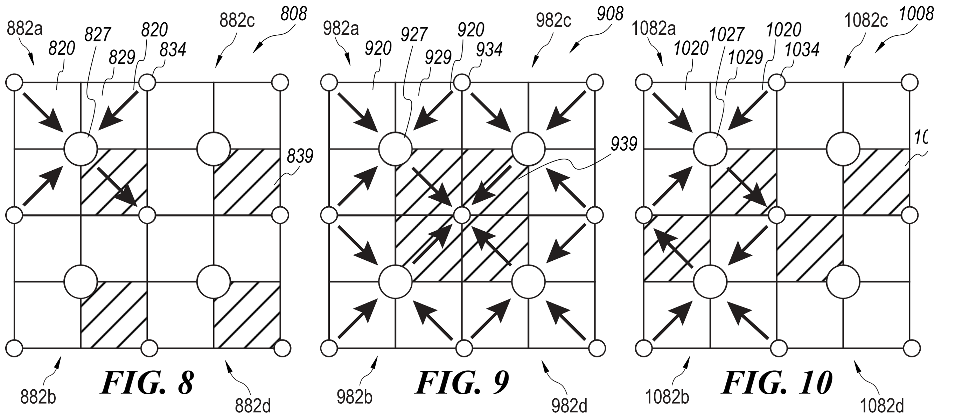

**FIGS. 8-10** illustrate pixel arrangements 808, 908, and 1008, respectively, configured in accordance with various embodiments of the present technology. The pixel arrangements 808, 908, and 1008 show different "25% EVS/75% CIS" allocations, which can be used for medium luminance conditions and/or can correspond to step 569 of the method 560 of **FIG. 5****.** The pixel arrangements 808, 908, and 1008 each include 16 pixel circuits arranged in four subunits, with each subunit containing four pixel circuits that can be switched between EVS and CIS configurations based on luminance conditions and motion detection results. The pixel arrangements 808, 908, and 1008 therefore demonstrate alternative approaches to achieving the same overall EVS to CIS ratio while providing different tradeoffs between photocurrent magnitude and sampling density of active EVS connections 834, 934, and 1034.

Referring to **FIG. 8****,** among the 16 pixel circuits 820 included in the pixel arrangement 808, four pixel circuits 820 are assigned as or switched to being operated as EVS pixel circuits 839 and 12 pixel circuits 820 are assigned as or switched to being operated as CIS pixel circuits 829. The CIS floating diffusion 827 of each of the first subunit 882a, the second subunit 882b, the third subunit 882c, and the fourth subunit 882d receives photocurrent from three pixel circuits 820 that are configured as CIS pixel circuits 829, as shown by arrows in **FIG. 8****.** One EVS connection 834 of each of the subunits 882a-882d receives photocurrent from a corresponding one of the pixel circuits 820 that is configured as an EVS pixel 839. In some cases, photocurrent directed to these four EVS connections 834 of the pixel arrangement 808 can be binned in a shared event driven circuit.

Referring next to **FIG. 9****,** among the 16 pixel circuits 920 included in the pixel arrangement 908, four pixel circuits 920 are similarly assigned as or switched to being operated as EVS pixel circuits 939 and 12 pixel circuits 920 are similarly assigned as or switched to being operated as CIS pixel circuits 929. As shown, however, only one EVS connection 934 of the pixel arrangement 908 receives photocurrent (from four of the pixel circuits 920 configured as EVS pixel circuits 939) while a corresponding image sensor is operated in a hybrid mode. The other eight EVS connections 934 receive no photocurrent while the corresponding image sensor is operated in the hybrid mode.

Referring now to **FIG. 10****,** among the 16 pixel circuits 1020 included in the pixel arrangement 1008, four pixel circuits 1020 are similarly assigned as or switched to being operated as EVS pixel circuits 1039 and 12 pixel circuits 1020 are similarly assigned as or switched to being operated as CIS pixel circuits 1029. As shown, however, three of the EVS connections 1034 of the pixel arrangement 1008 can receive photocurrent (with each receiving photocurrent from two pixel circuits 1020 configured as EVS pixel circuits 1039) while a corresponding image sensor is operated in a hybrid mode. For example, a center EVS connection 1034 can receive photocurrent from an EVS pixel circuit 1039 of the first subunit 1082a and an EVS pixel circuit 1039 of the fourth subunit 1082d. Two other EVS connections 1034 can receive photocurrent from an EVS pixel circuit 1039 of the second subunit 1082b and an EVS pixel circuit 1039 of the third subunit 1082c, respectively, and from EVS pixel circuits 1039 of neighboring pixel circuit arrangements (not shown). The other six EVS connections 1034 of the pixel arrangement 1008 receive no photocurrent while the corresponding image sensor is operated in the hybrid mode.

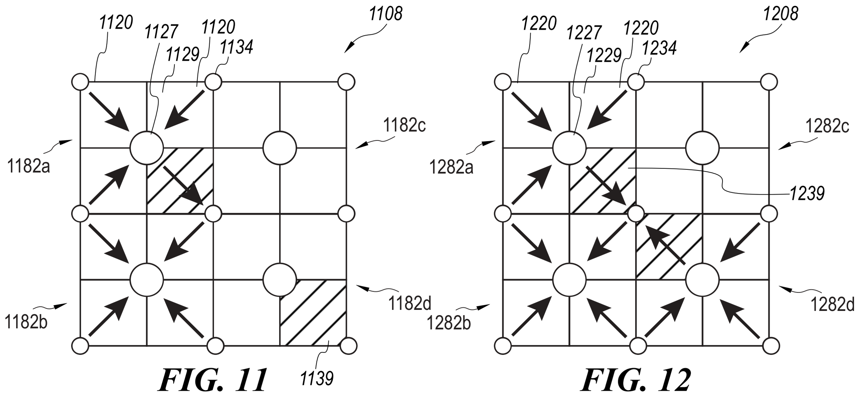

**FIGS. 11** and **12** illustrate pixel arrangements 1108 and 1208, respectively, configured in accordance with various embodiments of the present technology. The pixel arrangements 1108 and 1208 show different "12.5% EVS/87.5% CIS" allocations, which can be used for high luminance conditions and/or can correspond to step 571 of the method 560 of **FIG. 5****.** The pixel arrangements 1108 and 1208 each include 16 pixel circuits arranged in four subunits, with each subunit containing four pixel circuits that can be switched between EVS and CIS configurations based on luminance conditions and motion detection results. The pixel arrangements 1108 and 1208 demonstrate alternative approaches to achieving the same overall EVS to CIS ratio while providing different tradeoffs between photocurrent magnitude and sampling density of active EVS connections 1134 and 1234.

Referring to **FIG. 11****,** among the 16 pixel circuits 1120 included in the pixel arrangement 1108, two pixel circuits 1120 are assigned as or switched to being operated as EVS pixel circuits 1139 and 14 pixel circuits 1120 are assigned as or switched to being operated as CIS pixel circuits 1129. The CIS floating diffusions 1127 of a second subunit 1182b and a third subunit 1182c each receives photocurrent from all four of the corresponding pixel circuits 1120 that are configured as CIS pixel circuits 1129 while the corresponding image sensor is operated in the hybrid mode. The CIS floating diffusions 1127 of a first subunit 1182a and a fourth subunit 1182d each receives photocurrent from three of the corresponding pixel circuits 1120 that are configured as CIS pixel circuits 1129 while the corresponding image sensor is operated in the hybrid mode. Two of the EVS connections 1134 of the pixel arrangement 1108 each receives photocurrent from a corresponding one of the pixel circuits 1120 that is configured as an EVS pixel circuit 1139. More specifically, a first EVS connection 1134 receives photocurrent from an EVS pixel circuit 1139 of the first subunit 1182a while the corresponding image sensor is operated in the hybrid mode, and a second EVS connection 1134 receives photocurrent from an EVS pixel circuit 1139 of the fourth subunit 1182d while the corresponding image sensor is operated in the hybrid mode. In some cases, photocurrent directed to these two EVS connections 1134 of the pixel arrangement 1108 can be binned in a shared event driven circuit (not shown). The other seven EVS connections 1134 of the pixel arrangement 1108 receive no photocurrent while the corresponding image sensor is operated in the hybrid mode.

Referring now to **FIG. 12****,** the pixel arrangement 1208 shows another example "12.5% EVS/87.5% CIS" allocation that can be used for high luminance conditions and/or can correspond to step 571 of the method 560 of **FIG. 5****.** In contrast with the pixel arrangement 1108 of **FIG. 11****,** pixel circuits 1220 in the pixel arrangement 1208 of **FIG. 12** that are configured as EVS pixel circuits 1239 can direct photocurrent to a same EVS connection 1234 while the corresponding image sensor is operated in a hybrid mode. For example, in the illustrated embodiment, an EVS pixel circuit 1239 of a first subunit 1282a and an EVS pixel circuit 1239 of a fourth subunit 1282d can each direct photocurrent to the center EVS connection 1234 while the image sensor is operated in the hybrid mode. The other eight EVS connections 1234 receive no photocurrent while the image sensor is operated in the hybrid mode.

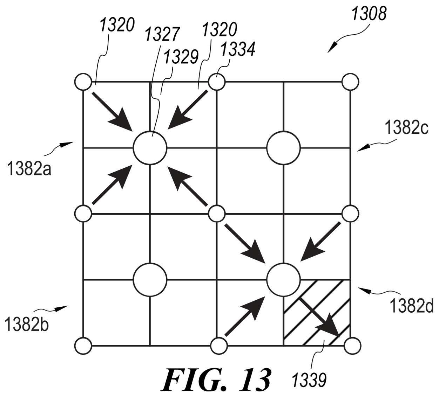

**FIG. 13** illustrates a pixel arrangement 1308 configured in accordance with various embodiments of the present technology. The pixel arrangement 1308 shows a "6.25% EVS/93.75% CIS" allocation that can be used for very high luminance conditions and/or can correspond to step 572 of the method 560 of **FIG. 5****.** The pixel arrangement 1308 includes 16 pixel circuits 1320 organized into four pixel circuit subunits 1382a-1382d, with each of the subunits 1382a-1382d containing four of the pixel circuits 1320. Each pixel circuit 1320 can be switched between an EVS configuration and a CIS configuration based on luminance conditions and motion detection results. A CIS floating diffusion 1327 is positioned at the center of each of the pixel circuit subunits 1382a-1382d. An EVS connection 1334 is located at each corner of the pixel subunits 1382a-1382d, such that multiple EVS connections 1334 are positioned about each of the subunits 1382a-1382d.

Among the 16 pixel circuits 1320 of the pixel arrangement 1308, only one pixel circuit 1320 is assigned as or switched to being operated as an EVS pixel 1339 while a corresponding image sensor is operated in a hybrid mode. The other 15 pixel circuits 1320 are assigned as or switched to CIS pixels 1329. CIS floating diffusions 1327 of the first subunit 1382a, the second subunit 1382b, and the third subunit 1382c each receives photocurrent from all four of the corresponding pixel circuits 1320 that are configured as CIS pixels 1329 while the corresponding image sensor is operated in the hybrid mode. The CIS floating diffusion 1327 of the fourth subunit 1382d receives photocurrent from three of the corresponding pixel circuits 1320 that are configured as CIS pixels 1329 while the corresponding image sensor is operated in the hybrid mode.

Only one of the EVS connections 1334 of the pixel arrangement 1308 receives photocurrent from a corresponding one of the pixel circuits 1320 that is configured as an EVS pixel 1339 while the corresponding image sensor is operated in the hybrid mode. More specifically, a first EVS connection 1334 receives photocurrent from the EVS pixel circuit 1339 of the fourth subunit 1382d while the corresponding image sensor is operated in the hybrid mode. The other eight EVS connections 1334 of the pixel arrangement 1308 receive no photocurrent while the corresponding image sensor is operated in the hybrid mode.

**FIGS. 14A** and **14B** illustrate a pixel arrangement 1408 configured in accordance with various embodiments of the present technology. The pixel arrangement 1408 shows a "3.125% EVS/96.875% CIS" allocation that represents a CIS-optimized configuration while maintaining minimal EVS functionality (e.g., for very high luminance conditions). In some embodiments, the "3.125% EVS/96.875% CIS" allocation can be used for luminance levels above the very high luminance levels (e.g., corresponding to step 572 of the method 560 of **FIG. 5****).** Thus, the method 560 of **FIG. 5** can include additional steps (e.g., an additional decision step to determine when luminance levels determined at block 565 correspond to very high luminance levels or luminance levels even higher than the very high luminance levels, and/or a step to configured the hybrid image sensor system as 3.125% EVS and 96.875% CIS when luminance levels determined at block 565 correspond to luminance levels above the very high luminance levels.

The pixel arrangement 1408 of **FIGS. 14A** and **14B** includes 16 pixel circuits 1420 organized into four subunits 1482a-1482d, with each of the subunits 1482a-1482d containing four pixel circuits 1420 that can be switched between EVS and CIS configurations based on luminance conditions and motion detection results. A pixel circuit 1420 of the fourth subunit 1482d can be configured to provide dual path photocurrent capability, allowing photocurrent from a single photosensor to be directed simultaneously to both CIS and EVS readout paths. More specifically, as shown in **FIGS. 14A** and **14B****,** a first pixel half 1435 of one of the pixel circuits 1420 of the fourth subunit 1482d can be configured as a CIS pixel circuit 1429 to provide photocurrent a CIS floating diffusion 1427 corresponding to the fourth subunit 1482d, and a second pixel half 1437 of the one of the pixel circuits 1420 can be configured as an EVS pixel circuit 1439 to simultaneously provide photocurrent to a corresponding EVS connection 1434. Such a configuration can correspond to operating the pixel circuit 1420 in a hybrid configuration, enabling the single pixel circuit 1420 to contribute to both CIS and EVS functionality.

In some embodiments, the pixel circuit 1420 can simultaneously contribute to both CIS and EVS functionality using image charge generated by a same photosensor in response to incident light. In these embodiments, the photocurrent from the photosensor can be approximately evenly divided between the floating diffusion 1427 and the EVS connection 1434, effectively splitting the available signal between the two readout paths. This dual path approach allows the pixel circuit 1420 to contribute to both conventional image capture and event detection capabilities without requiring a full pixel circuit to be dedicated exclusively to EVS functionality. Furthermore, as described above with reference to FIGS. 1A and 1B, the same photosensor, the first pixel half 1435, and the CIS pixel circuit 1429 can be positioned on a first die; and the second pixel half 1437 and the EVS pixel circuit 1439 can be positioned on a second die that is different from the first die. The second pixel half 1437 and the EVS pixel circuit 1439 can be coupled to the same photosensor via a hybrid bond, such as a pixel level hybrid bond. Additionally, or alternatively, in embodiments in which the pixel circuit 1420 includes a mode switch (e.g., similar to the mode switch 235 described above with reference to FIG. 2), the second pixel half 1437 and the EVS pixel circuit 1439 can be selectively coupled to the same photosensor via a switch (e.g., similar to the second switch 238 described above with reference to FIG. 2), which may be positioned on the first die or the second die.

Referring to **FIG. 14B****,** the dual path configuration of the pixel circuit 1420 can be conceptually represented as having a first pixel half 1435 and a second pixel half 1437. The first pixel half 1435 can be practically operated as a CIS pixel 1429, directing its portion of the photocurrent to the floating diffusion 1427 for conventional image readout. The second pixel half 1437 can be practically operated as an EVS pixel 1439, directing its portion of the photocurrent to the EVS connection 1434 for event-based processing. This conceptual division illustrates how the pixel circuit 1420 can simultaneously contribute to both CIS and EVS functionality while occupying the physical space of a single pixel circuit within the pixel arrangement 1408.

In other embodiments, pixel arrangements may utilize different EVS to CIS allocation ratios than those specifically illustrated in **FIGS. 6-14B****.** For example, a pixel arrangement of 16 pixel circuits may have five, six, or seven pixel circuits configured as EVS pixel circuits for low luminance or medium luminance conditions when a corresponding image sensor is operated in a hybrid mode. Such configurations may provide intermediate allocation ratios between the 50% EVS allocation shown for low luminance conditions and the 25% EVS allocation shown for medium luminance conditions. In still other embodiments, a pixel arrangement of 16 pixel circuits may have three pixel circuits configured as EVS pixel circuits for medium luminance or high luminance conditions when a corresponding image sensor is operated in a hybrid mode. This configuration may represent an intermediate allocation between the 25% EVS allocation for medium luminance and the 12.5% EVS allocation for high luminance conditions. These alternative allocation ratios may provide additional flexibility in optimizing sensor performance across varying scene conditions while balancing the tradeoffs between EVS latency performance and CIS signal-to-noise ratio.

### C. Examples

Several aspects of the present technology are set forth in the following examples. The provided examples do not limit the present technology. In addition, it is noted that any of the dependent examples may be combined in any combination, and placed into a respective independent example. Furthermore, although several aspects of the present technology are set forth in examples directed to systems/apparatuses and methods, those aspects of the present technology can similarly be set forth in examples directed to methods and systems/apparatuses, respectively, in other embodiments. Additionally, these aspects of the present technology may be set forth in examples directed to devices and/or (e.g., non-transitory) computer-readable media in other embodiments.
1. A hybrid image sensor, comprising:
   a pixel circuit array including a plurality of pixel circuits, wherein each pixel circuit of the plurality is reconfigurable between (i) a CMOS image sensor (CIS) configuration in which the pixel circuit is usable to obtain intensity information of light from an external scene and (ii) an event vision sensor (EVS) configuration in which the pixel circuit is usable to obtain contrast information of the light; and
   control circuitry configured to, based at least in part on motion detected in an the external scene, reconfigure a first subset of pixel circuits of the plurality of pixel circuits into the EVS configuration and thereby switch an operating mode of the hybrid image sensor between (a) a CIS-only mode in which all of the plurality of pixel circuits are configured in the CIS configuration and (b) a hybrid mode in which the first subset of pixel circuits of the plurality of pixel circuits are configured in the EVS configuration and a second subset of pixel circuits of the plurality of pixel circuits are configured in the CIS configuration.
2. The hybrid image sensor of example 1, wherein the control circuitry is configured to, based at least in part on luminance conditions within the external scene, control a number of pixel circuits of the plurality of pixel circuits included within the first subset.
3. The hybrid image sensor of example 2, wherein the control circuitry is configured to, based at least in part on the luminance conditions being below a threshold corresponding to low luminance conditions, reconfigure 50% of the pixel circuits of the plurality of pixel circuits into the EVS configuration based at least in part on the motion detected in the external scene.
4. The hybrid image sensor of example 3, wherein:
   the plurality of pixel circuits includes a pixel arrangement having four subunits arranged in a 2x2 grid of subunits;
   each of the four subunits includes four pixel circuits of the plurality of pixel circuits;
   the four pixel circuits of each of the four subunits are arranged in a 2x2 grid of pixel circuits;
   two pixel circuits of each of the four subunits are included in the first subset such that only 50% of pixel circuits included in the pixel arrangement are included in the first subset; and
   the two pixel circuits of each of the four subunits are arranged diagonally from one another within the subunit.
5. The hybrid image sensor of example 4, wherein:
   the hybrid image sensor further includes a plurality of event driven circuits coupled to the plurality of pixel circuits;
   the two pixel circuits of a first subunit of the four subunits are arranged across a first diagonal of the first subunit;
   the two pixel circuits of a second subunit of the four subunits that is laterally or vertically aligned with the first subunit are arranged across a second diagonal of the second subunit such that at least one of the two pixel circuits of the second subunit is configured to direct image charge to a same event driven circuit of the plurality of event driven circuits as at least one of the two pixel circuits of the first subunit.
6. The hybrid image sensor of any of examples 2-5, wherein the control circuitry is configured to, based at least in part on the luminance conditions being above a threshold corresponding to high luminance conditions, reconfigure 12.5% of the pixel circuits of the plurality of pixel circuits into the EVS configuration based at least in part on the motion detected in the external scene.
7. The hybrid image sensor of example 6, wherein:
   the plurality of pixel circuits includes a pixel arrangement having four subunits arranged in a 2x2 grid of subunits;
   each of the four subunits includes four pixel circuits of the plurality of pixel circuits;
   the four pixel circuits of each of the four subunits are arranged in a 2x2 grid of pixel circuits;
   one pixel circuit in each of a first subunit and a second subunit of the four subunits is included in the first subset such that only 12.5% of pixel circuits included in the pixel arrangement are included in the first subset; and
   the first subunit and the second subunits are arranged diagonally from one another in the 2x2 grid of subunits.
8. The hybrid image sensor of example 7, wherein:
   the hybrid image sensor further includes a plurality of event driven circuits coupled to the plurality of pixel circuits; and
   the one pixel circuit in the first subunit and the one pixel circuit in the second subunit are configured to direct image charge to a same event driven circuit of the plurality of event driven circuits as one another.
9. The hybrid image sensor of any of examples 6-8, wherein:
   the threshold is a first threshold; and
   the control circuitry is configured to, based at least in part on the luminance conditions being below the first threshold and above a second threshold corresponding to low luminance conditions, reconfigure 25% of the pixel circuits of the plurality of pixel circuits into the EVS configuration based at least in part on the motion detected in the external scene.
10. The hybrid image sensor of example 9, wherein:
   the plurality of pixel circuits includes a pixel arrangement having four subunits arranged in a 2x2 grid of subunits;
   each of the four subunits includes four pixel circuits of the plurality of pixel circuits;
   the four pixel circuits of each of the four subunits are arranged in a 2x2 grid of pixel circuits;
   one pixel circuit in each of the four subunits are included in the first subset such that only 12.5% of pixel circuits included in the pixel arrangement are included in the first subset.
11. The hybrid image sensor of example 10, wherein:
   the hybrid image sensor further includes a plurality of event driven circuits coupled to the plurality of pixel circuits; and
   each pixel circuit of the pixel arrangement that is included in the first subset is configured to direct image charge to a different event driven circuit of the plurality of event driven circuits from all other pixel circuits of the pixel arrangement that are included in the first subset.
12. The hybrid image sensor of example 10, wherein:
   the hybrid image sensor further includes a plurality of event driven circuits coupled to the plurality of pixel circuits; and
   each pixel circuit of the pixel arrangement that is included in the first subset is configured to direct image charge to a same event driven circuit of the plurality of event driven circuits as all other pixel circuits of the pixel arrangement that are included in the first subset.
13. The hybrid image sensor of example 10, wherein:
   the hybrid image sensor further includes a plurality of event driven circuits coupled to the plurality of pixel circuits;
   two pixel circuits of the pixel arrangement that are included in the first subset are each configured to direct image charge to different event driven circuits of the plurality of event driven circuits from all other pixel circuits of the pixel arrangement that are included in the first subset; and
   two other pixel circuits of the pixel arrangement that are included in the first subset are each configured to direct image charge to a same event driven circuit of the plurality of event driven circuits as one another.
14. The hybrid image sensor of any of examples 2-13, wherein the control circuitry is configured to, based at least in part on the luminance conditions being above a threshold corresponding to extra high luminance conditions, reconfigure 6.25% of the pixel circuits of the plurality of pixel circuits into the EVS configuration based at least in part on the motion detected in the external scene.
15. The hybrid image sensor of example 14, wherein:
   the plurality of pixel circuits includes a pixel arrangement having four subunits arranged in a 2x2 grid of subunits;
   each of the four subunits includes four pixel circuits of the plurality of pixel circuits;
   the four pixel circuits of each of the four subunits are arranged in a 2x2 grid of pixel circuits; and
   one pixel circuit in one of the four subunits is included in the first subset such that only 6.25% of pixel circuits included in the pixel arrangement are included in the first subset.
16. The hybrid image sensor of any of examples 2-16, wherein the control circuitry is configured to, based at least in part on the luminance conditions being above a threshold corresponding to extremely high luminance conditions, reconfigure 3.125% of the pixel circuits of the plurality of pixel circuits in the EVS configuration based at least in part on the motion detected in the external scene.
17. The hybrid image sensor of examaple 16, wherein:
   the plurality of pixel circuits includes a pixel arrangement having four subunits arranged in a 2x2 grid of subunits;
   each of the four subunits includes four pixel circuits of the plurality of pixel circuits;
   the four pixel circuits of each of the four subunits are arranged in a 2x2 grid of pixel circuits;
   half of one pixel circuit in one of the four subunits is included in the first subset such that only 3.125% of pixel circuits included in the pixel arrangement are included in the first subset.
18. A method of operating a hybrid image sensor having a pixel circuit array including a plurality of pixel circuits, the method comprising:
   detecting motion in an external scene; and
   based at least in part on the detected motion, configuring the hybrid image sensor into a hybrid mode in which a first subset of the plurality of pixel circuits are operated in an event vision sensor (EVS) configuration to capture contrast information and a second subset of the plurality of pixel circuits are operated in a CMOS image sensor (CIS) configuration to capture intensity information.
19. The method of example 18, wherein configuring the hybrid image sensor into the hybrid mode includes switching the hybrid image sensor from (i) a CIS-only mode in which all of the plurality of pixel circuits are operated in the CIS configuration to capture intensity information corresponding to the external scene to (ii) the hybrid mode, and wherein switching the hybrid image sensor from the CIS-only mode to the hybrid mode includes reconfiguring the first subset of pixel circuits of the plurality of pixel circuits into the EVS configuration to capture contrast information corresponding to the external scene.
20. The method of example 18 or example 19, wherein detecting the motion in the external scene includes analyzing intensity differences between successive intensity frames of a plurality of intensity frames.
21. The method of example 20, further comprising capturing the plurality of intensity frames while the hybrid image sensor is configured in a CIS-only mode in which all of the plurality of pixel circuits are operated in the CIS configuration to capture intensity information.
22. The method of example 20, further comprising capturing the plurality of intensity frames while the hybrid image sensor is configured in the hybrid mode.
23. The method of any of examples 18-22, further comprising controlling, based at least in part on luminance levels in the external scene, a number of pixel circuits of the plurality of pixel circuits included in the first subset.
24. The method of example 23, wherein controlling the number of pixel circuits included in the first subset includes controlling the number of pixel circuits included in the first subset such that the number of pixel circuits included in the first subset is inversely related to the luminance levels in the external scene.
25. The method of example 23 or example 24, further comprising determining the luminance levels in the external scene.
26. The method of example 25, wherein determining the luminance levels includes determining the luminance levels based at least in part on an intensity frame corresponding to the external scene.
27. The method of example 25 or example 26, wherein determining the luminance levels includes determining the luminance levels based at least in part on measurements captured by an ambient light sensor.
28. The method of any of examples 23-27, wherein controlling the number of pixel circuits included in the first subset includes configuring, based at least in part on the luminance levels, 50% of the pixel circuits of the plurality of pixel circuits into the EVS configuration and another 50% of the pixel circuits of the plurality of pixel circuits into the CIS configuration.
29. The method of any of examples 23-27, wherein controlling the number of pixel circuits included within the first subset includes configuring, based at least in part on the luminance levels, 12.5% of the pixel circuits of the plurality of pixel circuits into the EVS configuration and 87.5% of the pixel circuits of the plurality of pixel circuits into the CIS configuration.
30. The method of any of examples 23-27, wherein controlling the number of pixel circuits included within the first subset includes configuring, based at least in part on the luminance levels, 25% of the pixel circuits of the plurality of pixel circuits into the EVS configuration and 75% of the pixel circuits of the plurality of pixel circuits into the CIS configuration.
31. The method of any of examples 23-27, wherein controlling the number of pixel circuits included within the first subset includes configuring, based at least in part on the luminance levels, 6.25% of the pixel circuits of the plurality of pixel circuits into the EVS configuration and 93.75% of the pixel circuits of the plurality of pixel circuits into the CIS configuration.
32. The method of any of examples 23-27, wherein controlling the number of pixel circuits included within the first subset includes configuring, based at least in part on the luminance levels, 3.125% of the pixel circuits of the plurality of pixel circuits into the EVS configuration and 96.875% of the pixel circuits of the plurality of pixel circuits into the CIS configuration.
33. The method of example 32, wherein configuring 3.125% of the pixel circuits of the plurality of pixel circuits into the EVS configuration and 96.875% of the pixel circuits of the plurality of pixel circuits into the CIS configuration includes using charge photogenerated by a same photosensor of a pixel circuit to simultaneously contribute to both EVS and CIS functionality of the hybrid image sensor.
34. The method of any of examples 18-33, wherein:
   detecting the motion in the external scene includes analyzing first intensity differences between first successive intensity frames of a plurality of intensity frames corresponding to the external scene; and
   the method further comprises-
      capturing the plurality of intensity frames corresponding to the external scene, wherein capturing the plurality of intensity frames includes capturing the plurality of intensity frames using the hybrid image sensor while the hybrid image sensor is in a CIS-only mode in which all of the plurality of pixel circuits are operated in the CIS configuration to capture intensity information;
      analyzing second intensity differences between second successive intensity frames of the plurality of intensity frames to determine whether motion is present in the external scene;
      determining, based at least in part on analyzing the second intensity differences between the second successive intensity frames, that motion is not present in the external scene; and
      based at least in part on the determination that motion is not present in the external scene, capturing an additional intensity frame corresponding to the external scene while the hybrid image sensor is in the CIS-only mode.
35. The method of any of examples 18-34, further comprising:
   capturing one or more intensity frames and contrast information corresponding to the external scene using the hybrid image sensor while the hybrid image sensor is in the hybrid mode;
   analyzing, while the hybrid image sensor is in the hybrid mode, the contrast information to determine whether motion is present in the external scene;
   determining, based at least in part on analyzing the contrast information, that motion is present in the external scene; and
   based at least in part on the determination that motion is present in the external scene, maintaining the hybrid image sensor in the hybrid mode.
36. The method of example 35, wherein maintaining the hybrid image sensor in the hybrid mode includes adjusting, based at least in part on second luminance levels in the external scene, a number of pixel circuits of the plurality of pixel circuits included in the first subset.
37. The method of any of examples 18-34, further comprising:
   capturing one or more intensity frames and contrast information corresponding to the external scene using the hybrid image sensor while the hybrid image sensor is in the hybrid mode;
   analyzing, while the hybrid image sensor is in the hybrid mode, the contrast information to determine whether motion is present in the external scene;
   determining, based at least in part on analyzing the contrast information, that motion is not present in the external scene; and
   based at least in part on the determination that motion is not present in the external scene, switching the hybrid image sensor from the hybrid mode to a CIS-only mode by reconfiguring the first subset of pixel circuits into the CIS configuration to capture intensity information corresponding to the external scene.
38. A method of operating a hybrid image sensor having a pixel circuit array including a plurality of pixel circuits, the method comprising:
   capturing a plurality of intensity frames corresponding to an external scene, wherein capturing the plurality of intensity frames includes capturing the plurality of intensity frames using the hybrid image sensor while the hybrid image sensor is in a CMOS-image-sensor-only (CIS-only) mode in which all of the plurality of pixel circuits are operated in a CIS configuration to capture intensity information;
   analyzing first intensity differences between two successive intensity frames of the plurality of intensity frames to determine whether motion is present in the external scene;
   determining, based at least in part on analyzing the first intensity differences between the two successive intensity frames, that motion is not present in the external scene; and
   based at least in part on the determination that motion is not present in the external scene, capturing an additional intensity frame corresponding to the external scene while the hybrid image sensor is in the CIS-only mode.
39. The method of example 38, further comprising:
   analyzing second intensity differences between another two successive intensity frames of the plurality of intensity frames to determine whether motion is present in the external scene;
   determining, based at least in part on analyzing the second intensity differences between the other two successive intensity frames, that motion is present in the external scene; and
   based at least in part on determining that motion is present in the external scene, switching the hybrid image sensor from the CIS-only mode to a hybrid mode by reconfiguring a first subset of pixel circuits of the plurality of pixel circuits into an event vision sensor (EVS) configuration to capture contrast information corresponding to the external scene.
40. The method of example 39, wherein switching the hybrid image sensor from the CIS-only mode to the hybrid mode includes controlling, based at least in part on luminance levels in the external scene, a number of pixel circuits of the plurality of pixel circuits included in the first subset.
41. The method of example 40, further comprising determining the luminance levels in the external scene, wherein controlling the number of pixel circuits included in the first subset include such that the number of pixel circuits included in the first subset is inversely related to the determined luminance levels.
42. The method of any of examples 39-41, further comprising:
   capturing one or more intensity frames and contrast information corresponding to the external scene using the hybrid image sensor while the hybrid image sensor is in the hybrid mode;
   analyzing, while the hybrid image sensor is in the hybrid mode, the contrast information to determine whether motion is present in the external scene;
   determining, based at least in part on analyzing the contrast information, that motion is present in the external scene; and
   based at least in part on the determination that motion is present in the external scene, maintaining the hybrid image sensor in the hybrid mode.
43. The method of example 42, wherein maintaining the hybrid image sensor in the hybrid mode includes adjusting, based at least in part on second luminance levels in the external scene, the number of pixel circuits of the plurality of pixel circuits included in the first subset.
44. The method of any of examples 39-41, further comprising:
   capturing one or more intensity frames and contrast information corresponding to the external scene using the hybrid image sensor while the hybrid image sensor is in the hybrid mode;
   analyzing, while the hybrid image sensor is in the hybrid mode, the contrast information to determine whether motion is present in the external scene;
   determining, based at least in part on analyzing the contrast information, that motion is not present in the external scene; and
   based at least in part on the determination that motion is not present in the external scene, switching the hybrid image sensor from the hybrid mode to the CIS-only mode by reconfiguring the first subset of pixel circuits into a CIS configuration to capture intensity information corresponding to the external scene.

### D. Conclusion

The above detailed descriptions of embodiments of the technology are not intended to be exhaustive or to limit the technology to the precise form disclosed above. Although specific embodiments of, and examples for, the technology are described above for illustrative purposes, various equivalent modifications are possible within the scope of the technology as those skilled in the relevant art will recognize. For example, although steps are presented in a given order above, alternative embodiments may perform steps in a different order. Furthermore, the various embodiments described herein may also be combined to provide further embodiments.

From the foregoing, it will be appreciated that specific embodiments of the technology have been described herein for purposes of illustration, but well-known structures and functions have not been shown or described in detail to avoid unnecessarily obscuring the description of the embodiments of the technology. Where context permits, singular or plural terms may also include the plural or singular term, respectively. In addition, unless the word "or" is expressly limited to mean only a single item exclusive from the other items in reference to a list of two or more items, then the use of "or" in such a list is to be interpreted as including (a) any single item in the list, (b) all of the items in the list, or (c) any combination of the items in the list. Furthermore, as used herein, the phrase "and/or" as in "A and/or B" refers to A alone, B alone, and both A and B. Additionally, the terms "comprising," "including," "having," and "with" are used throughout to mean including at least the recited feature(s) such that any greater number of the same features and/or additional types of other features are not precluded. Moreover, as used herein, the phrases "based on," "depends on," "as a result of," and "in response to" shall not be construed as a reference to a closed set of conditions. For example, an exemplary step that is described as "based on condition A" may be based on both condition A and condition B without departing from the scope of the present disclosure. In other words, as used herein, the phrase "based on" shall be construed in the same manner as the phrase "based at least in part on" or the phrase "based at least partially on." Also, the terms "connect" and "couple" are used interchangeably herein and refer to both direct and indirect connections or couplings. For example, where the context permits, element A "connected" or "coupled" to element B can refer (i) to A directly "connected" or directly "coupled" to B and/or (ii) to A indirectly "connected" or indirectly "coupled" to B.

From the foregoing, it will also be appreciated that various modifications may be made without deviating from the disclosure or the technology. For example, one of ordinary skill in the art will understand that various components of the technology can be further divided into subcomponents, or that various components and functions of the technology may be combined and integrated. In addition, certain aspects of the technology described in the context of particular embodiments may also be combined or eliminated in other embodiments. Furthermore, although advantages associated with certain embodiments of the technology have been described in the context of those embodiments, other embodiments may also exhibit such advantages, and not all embodiments need necessarily exhibit such advantages to fall within the scope of the technology. Accordingly, the disclosure and associated technology can encompass other embodiments not expressly shown or described herein. Finally, to the extent any material incorporated herein by reference conflicts with the present disclosure, the present disclosure controls.

## Claims

1. A hybrid image sensor, comprising:
a pixel circuit array including a plurality of pixel circuits, wherein each pixel circuit of the plurality is reconfigurable between (i) a CMOS image sensor (CIS) configuration in which the pixel circuit is usable to obtain intensity information of light from an external scene and (ii) an event vision sensor (EVS) configuration in which the pixel circuit is usable to obtain contrast information of the light; and
control circuitry configured to, based at least in part on motion detected in an the external scene, reconfigure a first subset of pixel circuits of the plurality of pixel circuits into the EVS configuration and thereby switch an operating mode of the hybrid image sensor between (a) a CIS-only mode in which all of the plurality of pixel circuits are configured in the CIS configuration and (b) a hybrid mode in which the first subset of pixel circuits of the plurality of pixel circuits are configured in the EVS configuration and a second subset of pixel circuits of the plurality of pixel circuits are configured in the CIS configuration.

2. The hybrid image sensor of claim 1, wherein the control circuitry is configured to, based at least in part on luminance conditions within the external scene, control a number of pixel circuits of the plurality of pixel circuits included within the first subset.

3. The hybrid image sensor of claim 2, wherein the control circuitry is configured to, based at least in part on the luminance conditions being below a threshold corresponding to low luminance conditions, reconfigure 50% of the pixel circuits of the plurality of pixel circuits into the EVS configuration based at least in part on the motion detected in the external scene.

4. The hybrid image sensor of claim 3, wherein:
the plurality of pixel circuits includes a pixel arrangement having four subunits arranged in a 2x2 grid of subunits;
each of the four subunits includes four pixel circuits of the plurality of pixel circuits;
the four pixel circuits of each of the four subunits are arranged in a 2x2 grid of pixel circuits;
two pixel circuits of each of the four subunits are included in the first subset such that only 50% of pixel circuits included in the pixel arrangement are included in the first subset; and
the two pixel circuits of each of the four subunits are arranged diagonally from one another within the subunit.

5. The hybrid image sensor of claim 4, wherein:
the hybrid image sensor further includes a plurality of event driven circuits coupled to the plurality of pixel circuits;
the two pixel circuits of a first subunit of the four subunits are arranged across a first diagonal of the first subunit;
the two pixel circuits of a second subunit of the four subunits that is laterally or vertically aligned with the first subunit are arranged across a second diagonal of the second subunit such that at least one of the two pixel circuits of the second subunit is configured to direct image charge to a same event driven circuit of the plurality of event driven circuits as at least one of the two pixel circuits of the first subunit.

6. The hybrid image sensor of any of claims 2-5, wherein the control circuitry is configured to, based at least in part on the luminance conditions being above a threshold corresponding to high luminance conditions, reconfigure 12.5% of the pixel circuits of the plurality of pixel circuits into the EVS configuration based at least in part on the motion detected in the external scene.

7. The hybrid image sensor of claim 6, wherein:
the plurality of pixel circuits includes a pixel arrangement having four subunits arranged in a 2x2 grid of subunits;
each of the four subunits includes four pixel circuits of the plurality of pixel circuits;
the four pixel circuits of each of the four subunits are arranged in a 2x2 grid of pixel circuits;
one pixel circuit in each of a first subunit and a second subunit of the four subunits is included in the first subset such that only 12.5% of pixel circuits included in the pixel arrangement are included in the first subset; and
the first subunit and the second subunits are arranged diagonally from one another in the 2x2 grid of subunits.

8. The hybrid image sensor of claim 7, wherein:
the hybrid image sensor further includes a plurality of event driven circuits coupled to the plurality of pixel circuits; and
the one pixel circuit in the first subunit and the one pixel circuit in the second subunit are configured to direct image charge to a same event driven circuit of the plurality of event driven circuits as one another.

9. The hybrid image sensor of any of claims 6-8, wherein:
the threshold is a first threshold; and
the control circuitry is configured to, based at least in part on the luminance conditions being below the first threshold and above a second threshold corresponding to low luminance conditions, reconfigure 25% of the pixel circuits of the plurality of pixel circuits into the EVS configuration based at least in part on the motion detected in the external scene.

10. The hybrid image sensor of claim 9, wherein:
the plurality of pixel circuits includes a pixel arrangement having four subunits arranged in a 2x2 grid of subunits;
each of the four subunits includes four pixel circuits of the plurality of pixel circuits;
the four pixel circuits of each of the four subunits are arranged in a 2x2 grid of pixel circuits;
one pixel circuit in each of the four subunits are included in the first subset such that only 12.5% of pixel circuits included in the pixel arrangement are included in the first subset.

11. The hybrid image sensor of claim 10, wherein:
the hybrid image sensor further includes a plurality of event driven circuits coupled to the plurality of pixel circuits; and
each pixel circuit of the pixel arrangement that is included in the first subset is configured to direct image charge to a different event driven circuit of the plurality of event driven circuits from all other pixel circuits of the pixel arrangement that are included in the first subset.

12. The hybrid image sensor of claim 10, wherein:
the hybrid image sensor further includes a plurality of event driven circuits coupled to the plurality of pixel circuits; and
each pixel circuit of the pixel arrangement that is included in the first subset is configured to direct image charge to a same event driven circuit of the plurality of event driven circuits as all other pixel circuits of the pixel arrangement that are included in the first subset.

13. The hybrid image sensor of claim 10, wherein:
the hybrid image sensor further includes a plurality of event driven circuits coupled to the plurality of pixel circuits;
two pixel circuits of the pixel arrangement that are included in the first subset are each configured to direct image charge to different event driven circuits of the plurality of event driven circuits from all other pixel circuits of the pixel arrangement that are included in the first subset; and
two other pixel circuits of the pixel arrangement that are included in the first subset are each configured to direct image charge to a same event driven circuit of the plurality of event driven circuits as one another.

14. The hybrid image sensor of any of claims 2-13, wherein the control circuitry is configured to, based at least in part on the luminance conditions being above a threshold corresponding to extra high luminance conditions, reconfigure 6.25% of the pixel circuits of the plurality of pixel circuits into the EVS configuration based at least in part on the motion detected in the external scene.

15. The hybrid image sensor of claim 14, wherein:
the plurality of pixel circuits includes a pixel arrangement having four subunits arranged in a 2x2 grid of subunits;
each of the four subunits includes four pixel circuits of the plurality of pixel circuits;
the four pixel circuits of each of the four subunits are arranged in a 2x2 grid of pixel circuits; and
one pixel circuit in one of the four subunits is included in the first subset such that only 6.25% of pixel circuits included in the pixel arrangement are included in the first subset.

16. The hybrid image sensor of any of claims 2-16, wherein the control circuitry is configured to, based at least in part on the luminance conditions being above a threshold corresponding to extremely high luminance conditions, reconfigure 3.125% of the pixel circuits of the plurality of pixel circuits in the EVS configuration based at least in part on the motion detected in the external scene.

17. The hybrid image sensor of claim 16, wherein:
the plurality of pixel circuits includes a pixel arrangement having four subunits arranged in a 2x2 grid of subunits;
each of the four subunits includes four pixel circuits of the plurality of pixel circuits;
the four pixel circuits of each of the four subunits are arranged in a 2x2 grid of pixel circuits;
half of one pixel circuit in one of the four subunits is included in the first subset such that only 3.125% of pixel circuits included in the pixel arrangement are included in the first subset.
